# EUROPÄISCHE PATENTSCHRIFT

(11) **EP 4 466 480 B1**
(45) Veröffentlichungstag und Bekanntmachung des Hinweises auf die Patenterteilung: **11.03.2026**
(21) Anmeldenummer: 23700931.1
(22) Anmeldetag: 12.01.2023
(51) Int. Cl.: F16L 55/033, H01L 23/473

(54) **KOMPENSATIONSELEMENT, VERFAHREN UND SYSTEM ZUM AKTIVEN DÄMPFEN EINES MEDIUMS**
COMPENSATION ELEMENT, METHOD AND SYSTEM FOR THE ACTIVE DAMPING OF A MEDIUM
ÉLÉMENT DE COMPENSATION, PROCÉDÉ ET SYSTÈME D'AMORTISSEMENT ACTIF D'UN MILIEU

(30) Priorität: 21.01.2022 DE 102022101448
(43) Veröffentlichungstag der Anmeldung: 27.11.2024
(73) Patentinhaber: Integrated Dynamics Engineering GmbH, 65479 Raunheim (DE)
(72) Erfinder: HARTGERS, Johannes, 55122 Mainz (DE); VEHOF, Robert, 7425 EJ Deventer (NL)
(74) Vertreter: Blumbach · Zinngrebe Patentanwälte PartG mbB
(86) Internationale Anmeldenummer: PCT/EP2023/050609
(87) Internationale Veröffentlichungsnummer: WO 2023/138972

(56) Entgegenhaltungen:
- EP-A2- 0 886 262
- EP-B1- 0 679 832
- WO-A1-2019/037840
- GB-A- 2 590 667
- JP-B2- 6 857 228

## Beschreibung

Die vorliegende Erfindung betrifft allgemein ein Kompensationselement sowie ein Verfahren und ein System zum aktiven Dämpfen von Schwingungen eines Mediums, insbesondere eines Fluids. Durch das Kompensationselement können beispielsweise Druckschwankungen in Rohrleitungssystemen ausgeglichen werden.

Die Übertragung von Schwingungen durch Medien, insbesondere Fluiden, ist schon seit längerer Zeit ein Problem. Gerade bei inkompressiblen Flüssigkeiten erfolgt eine nur geringe Dämpfung von Schwingungen bei der Ausbreitung, so dass diese sich weit ausbreiten können. Dies betrifft beispielsweise mit Flüssigkeit gefüllte Rohrleitungssysteme, an welche empfindliche Maschinen und Anlagen angeschlossen sind und welche entsprechend hohe Anforderungen an einen konstanten Druck in dem Rohrleitungssystem stellen. Um mögliche Druckschwankungen zu reduzieren, sind verschiedene Lösungen entwickelt worden.

So sind beispielsweise Ausdehnungsgefäße als quasi flexibler Kompensator bekannt, welche es ermöglichen, in geschlossenen Rohrleitungssystemen das Rohrleitungsvolumen bei Druckanstieg zu erweitern und umgekehrt das Rohrleitungsvolumen bei Druckabfall zu reduzieren. Dies kann allerdings dazu beitragen, dass der Druck nach diesem Kompensator oder Behälter geringer wird.

Dabei kann es erforderlich werden, dass für bestimmte Anwendungen, beispielsweise bei Präzisionsgeräten, welche sehr hohe Anforderungen an konstante Druckverhältnisse stellen, relativ große Volumina für die Ausdehnungsgefäße benötigt werden, um die Druckänderungen effektiv auszugleichen. Druckänderungen können, insbesondere bei inkompressiblen Fluiden wie Wasser, zu Schwingungen führen, welche in Leitungssystemen vielfach reflektiert und damit über weite Strecken transportiert werden können. Dabei können beispielsweise empfindliche Geräte, zum Beispiel Elektronenstrahlgeräte, oder auch Sensoren beeinträchtigt oder sogar beschädigt werden. Dabei können auch Volumenänderungen auftreten, welche sich ungünstig auf die angeschlossenen Geräte oder Anlagen auswirken können.

Die Druckänderungen können weiterhin zu Verformungen führen, welche zu weiteren Beeinträchtigungen oder sogar Schäden führen können.

Vor diesem Hintergrund werden derartige Lösungen eher für Anwendungen eingesetzt, bei denen geringere Anforderungen gelten. So werden derartige Ausdehnungsgefäße zum Beispiel verwendet, um den Druck in einem Heizungskreislauf konstant zu halten oder Wasserschläge in dem Wasserkreislauf eines Hauses zu verhindern. In der Regel sind diese auf einen bestimmten Frequenzbereich abgestimmt.

Eine andere Lösung sieht vor, mittels einer Kombination von Helmholtz-ähnlichen Resonatoren in der Strömung Druckschwankungen bei verschiedenen Frequenzen zu kompensieren oder zumindest zu reduzieren. Die Resonatoren werden in Abhängigkeit des zu dämpfenden Volumens und der Rohrlängen entsprechend ausgewählt, um den Frequenzgang anpassen zu können.

Ein derartiges Dämpfungselement zur Dämpfung von Schwingungen in einer Druckleitung beschreibt die DE 10 2013 217 119 A1 am Beispiel der Kupplung eines Kraftfahrzeuges. Hierbei wird ein auf der Basis eines Helmholtz-Resonators arbeitender hohlzylindrischer Dämpfer vorgeschlagen, welcher ein doppelwandiges Gehäuse zur Ausbildung eines Dämpfervolumens umfasst. Derartige Resonatoren sind typischerweise exakt auf ein bestimmtes Frequenzfeld abgestimmt, welches dann effektiv gefiltert werden kann. Bei einem größeren Frequenzspektrum muss das Dämpfervolumen erhöht werden.

Ein hydraulisches Dämpfungselement beschreibt die DE 10 2011 081 538 A1, ebenfalls am Beispiel eines hydraulischen Ausrücksystems einer Kupplung im Antriebsstrang eines Kraftfahrzeuges. Das Dämpfungselement umfasst dabei eine drehbar gelagerte Dämpfungsmasse, welche durch einen Volumenstrom durch die Fluidleitung in Rotation versetzt wird.

Derartige Dämpfungselemente mögen zuverlässig sein, sind aber recht komplex im Aufbau und zudem im Allgemeinen relativ groß im Vergleich zu beispielsweise dem Rohrleitungsdurchmesser.

Zudem müssen sie individuell auf das Volumen und das Rohrleitungssystem abgestimmt werden.

EP 0 679 832 B1 beschreibt eine Vorrichtung zur Reduzierung von Druckpulsationen in einer Hydraulikleitung, wobei in einem mit der Leitung verbundenen Ausgleichsvolumen eine verschiebliche Wandung vorgesehen ist.

WO 2019/037840 beschreibt ein Verfahren zur Pulsationsdämpfung in einem fluidführenden System. Es ist vorgesehen, den Druck im Zwischenraum auf einen Minimalwert der Fluiddruckpulsationsamplitude zu regeln.

GB 2 590 667 A beschreibt eine Auslasskupplung für die Pumpe, die ein Auslassrohr, das sich zwischen dem Einlass und dem Auslass erstreckt, umfasst, wobei die Auslassöffnung hat eine Drossel, deren Querschnittsfläche variieren kann. Die Drossel kann aus einem herausnehmbaren Einsatz oder einer austauschbaren Drossel bestehen. Die Drossel kann als Reaktion auf eine gemessene Temperatur, einen gemessenen Druck und/oder eine gemessene Durchflussmenge und/oder als Reaktion auf den Wunsch des Benutzers, Geräusche zu reduzieren oder die Ausfallzeit der Pumpe zu verringern, betätigt werden. Die Rohrleitung kann Abschnitte mit unterschiedlichen Querschnitten aufweisen. Der Einlass kann eine kleinere Querschnittsfläche haben als ein benachbarter Abschnitt der Rohrleitung und kann einen Abschnitt haben, der sich von der Rohrleitung aus erstreckt. Die Rohrleitung kann mindestens einen gebogenen und/oder flexiblen Abschnitt aufweisen.

EP 0 886 262 A2 beschreibt ein Verfahren zur Lärmminderung von schallführender Medien in Rohrleitungen durch Erzeugung eines Gegenschalls, wobei der Gegenschall durch ein oder mehrere Segmente der Rohrwandung erzeugt wird, und wobei die Segmente aus piezoelektrischen Folien bestehen, die zur Gegenschallerzeugung mittels einer Kontrolleinheit angesteuert werden.

Andere Dämpfungssysteme arbeiten mit einem elektro- oder magneto-rheologischen Fluid, wie es beispielsweise aus der Patentschrift EP 2 759 735 B1 der Anmelderin bekannt ist. Die Dämpfung kann hierbei über eine Regelschleife individuell und fortlaufend eingestellt werden.

Dies ist vergleichsweise aufwendig und kann zudem zeitkritisch sein aufgrund eines verzögerten Antwortverhaltens.

Wünschenswert wäre demnach ein Kompensations- oder Dämpfungselement, welches diese Nachteile nicht aufweist.

Dabei sollte das Kompensations- oder Dämpfungselement möglichst von geringer Baugröße sein.

Ferner wäre es günstig, wenn das Kompensations- oder Dämpfungselement zumindest teilweise flexibel an die konkreten Ausprägungen des Volumens und des Rohrleitungssystems angepasst werden kann, also nicht für jedes Volumen oder jedes Rohrleitungssystem ein spezielles Kompensations- oder Dämpfungselement bereitgestellt werden muss.

Günstig wäre zudem eine einfache Montage an dem vorgesehenen Rohrleitungssystem.

Weiterhin sollte das Kompensations- oder Dämpfungselement auch zusammen mit unterschiedlichsten Medien, insbesondere verschiedenen Fluiden, einsetzbar sein. Hierzu gehören beispielsweise auch Medien umfassend Ultrapure Water (UPW), wie es etwa in der Halbleiterindustrie verwendet werden kann und welches sehr korrosiv ist, oder andere aggressive und/oder korrosive Medien oder auch Flüssigkeiten wie zum Beispiel dielektrische Flüssigkeiten, z.B. stark Fluor-haltige Flüssigkeiten.

Dieser Aufgabe haben sich die Erfinder angenommen.

Überraschend einfach wird diese Aufgabe durch ein Kompensationselement zur aktiven Dämpfung von Schwingungen eines Mediums, insbesondere eines Fluids, sowie ein Verfahren und ein System zur aktiven Dämpfung von Schwingungen eines Mediums, insbesondere eines Fluids, nach einem der unabhängigen Ansprüche gelöst. Bevorzugte Ausführungsformen und Weiterbildungen der Erfindung sind den jeweiligen Unteransprüchen zu entnehmen.

Gegenstand der Erfindung ist demnach ein Kompensationselement zur aktiven Dämpfung von Schwingungen eines Mediums, umfassend unter anderem
- einen Hohlkörper, der ein Innenvolumen aufweist,
   wobei in dem Innenvolumen ein Kompensationsvolumen ausgebildet wird,
   wobei der Hohlkörper ferner zumindest zwei Öffnungen aufweist, welche das Kompensationsvolumen mit der Umgebung verbinden können, und
- zumindest einen Aktuator, welcher im Betrieb das Kompensationsvolumen vergrößern oder verkleinern kann.

Der Aktuator kann gemäß einer bevorzugten Ausführungsform der Erfindung in dem Innenvolumen angeordnet sein, aber auch außerhalb davon.

Das Medium kann insbesondere ein Fluid umfassen, welches in gasförmiger oder flüssiger Form vorliegen kann. Das Kompensationselement kann besonders günstig in Verbindung mit wenig kompressiblen oder inkompressiblen Fluiden, insbesondere Flüssigkeiten, verwendet werden. Hierunter werden Fluide verstanden, welche unter Normaldruck bei 0,1 MPa und bei einer Temperatur von 10 °C ein Kompressionsmodul von wenigstens 1,0·10⁹ Pa, bevorzugt wenigstens 1,5·10⁹ Pa und besonders bevorzugt wenigstens 2,0·10⁹ Pa aufweisen. Für die Erfindung besonders geeignete Fluide umfassen demnach Öl, Wasser oder auch Öl-WasserGemische.

In einer Ausführungsform der Erfindung ist auch vorgesehen, als Medium demineralisiertes Wasser zu verwenden, also das Kompensationselement in Verbindung mit gereinigten und/oder demineralisierten Flüssigkeiten zu betreiben. Demineralisiertes Wasser kann anhand der Leitfähigkeit eingeteilt werden in gereinigtes, salzarmes Wasser mit einer Leitfähigkeit von 1-50 µS/cm ("Purified Water"), reines Wasser mit einer Leitfähigkeit von 0,1-1 µS/cm ("Pure Water") sowie hochreines Wasser mit einer Leitfähigkeit von 0,055-0,1 µS/cm ("Ultrapure Water"). Die Erfindung ist insbesondere auch geeignet zum Betrieb mit gereinigtem, reinem oder hochreinem Wasser bzw. "Ultrapure Water" (UPM), wie es in der Halbleiterindustrie gefordert und verwendet wird. Bei diesen Flüssigkeiten können auch noch andere Parameter und Mengen kontrolliert und reduziert sein, beispielsweise der gesamte oxidierbare Kohlenstoff (TOC), Partikel, oder gelöste Gase. Die Erfindung betrifft demnach in einem Aspekt auch ein Kompensationselement, welches ausgebildet ist für eine Verwendung mit salzarmen Wasser, reinem Wasser und hochreinem Wasser.

In einer weiteren Ausführungsform der Erfindung ist auch vorgesehen, technische oder dielektrische Fluide, insbesondere Flüssigkeiten, zum Beispiel Fluor-haltige Fluide, etwa Fluor-haltige Flüssigkeiten, zu verwenden. Allgemein kann das Medium aggressive oder korrosive Flüssigkeiten oder Gase umfassen.

Das Medium kann dabei beispielsweise in einem Rohrleitungssystem, einer Fluidleitung, einer hydraulischen Strecke, einer Druckleitung oder auch allgemein in einem sonstigen geeigneten Behältnis oder Gefäß enthalten oder in diesem geführt sein.

Vereinfachend wird nachfolgend allein von einer Fluidleitung gesprochen, wobei hierbei auch eine hydraulische Strecke, eine Druckleitung, ein Rohrleitungssystem oder auch allgemein ein sonstiges Behältnis oder Gefäß, welches geeignet ist zur Aufnahme eines Mediums, insbesondere eines Fluids, mit umfasst sein soll. Im Sinne der Erfindung ist diese Fluidleitung im Betrieb mit dem zu dämpfenden Medium, insbesondere Fluid, zumindest teilweise, gefüllt.

In bestimmten Ausführungsformen kann der Hohlkörper auch durch die Fluidleitung selbst bereitgestellt werden. In anderen Worten, das Innenvolumen eines Abschnitts einer Fluidleitung kann als Kompensationsvolumen dienen.

Die Öffnungen des Kompensationselements können mit der Fluidleitung kraft- und/oder formschlüssig verbunden sein. Hierzu können geeignete Verbindungsmittel oder Armaturen zur Ausbildung einer kraft- und/oder formschlüssigen Verbindung zwischen der Fluidleitung und den Öffnungen vorgesehen sein. Von Vorteil sind diese derart ausgewählt, dass eine einfache Montage und auch günstigerweise eine zerstörungsfreie Demontage ermöglicht werden kann. Auf diese Weise ist ein einfaches Anbringen des Kompensationselements gegeben, und auf beispielsweise Schweißnähte kann verzichtet werden, was auch im Hinblick auf mögliche Verformungen oder Rissbildungen von Vorteil sein kann. Bei einem möglichen Defekt kann das Kompensationselement einfach ausgetauscht und ersetzt werden.

Es ist gemäß einer weiteren Ausführungsform der Erfindung auch möglich und denkbar, das Kompensationselement direkt mit einem Anlagenteil oder Gerät zu verbinden, welches beispielsweise mit Wasser gekühlt werden soll und/oder gedämpft werden soll. Selbstverständlich können auch mehrere Kompensationselemente an einer Anlage oder einem Gerät vorgesehen sein, um beispielsweise eine größere Fläche oder einen Bereich zu kühlen.

Die derart angebrachten Kompensationselemente können mit der Fluidleitung verbunden sein, wobei dies nicht nur in Linienstrukturen, sondern auch in Netzstrukturen möglich sein kann. Auf diese Weise lassen sich zum Beispiel auch größere Flächen besonders vorteilhaft kühlen.

Die Verbindungen mit der Fluidleitung können dabei auch nach der Montage des Kompensationselements geschaffen werden. Die Erfindung betrifft demnach auch in einem Aspekt ein Kompensationselement, welches direkt mit Anlagenteil oder Gerät verbindbar oder verbunden ist. Es versteht sich, dass hierzu geeignete Befestigungsmittel an dem Kompensationselement vorgesehen sein können. Die Befestigung kann auch beispielsweise mittels Kleben erfolgen. In anderen Ausführungsformen kann es aber auch günstig sein, wenn die Verbindung zerstörungsfrei lösbar ausgebildet ist.

Zur aktiven Dämpfung der Schwingungen kann das Kompensationselement mit der Fluidleitung fest und fluiddicht verbunden sein. Unter fluiddicht ist zu verstehen, dass an den Verbindungsstellen zwischen Kompensationselement und Fluidleitung im regulären Betrieb, also bei vorbestimmten Druck- oder Temperaturverhältnissen, kein Medium bzw. kein Fluid austritt.

Dabei kann derjenige Abschnitt der Fluidleitung, welcher den potentiellen Druckschwankungen ausgesetzt ist, mit einer ersten Öffnung des Hohlkörpers verbunden werden. Die zweite Öffnung ist hierzu von Vorteil ebenfalls mit einer Fluidleitung verbunden.

Die erste Öffnung wird nachfolgend auch als Eingang oder Eingangsöffnung und die zweite Öffnung als Ausgang oder Ausgangsöffnung bezeichnet, wobei diese Unterscheidung hinsichtlich der Funktionalität der Öffnungen bzw. der damit verbundenen Fluidleitungen und nicht hinsichtlich ihrer technischen Ausbildung getroffen ist.

Die zweite Öffnung des Hohlkörpers stellt somit den Ausgang für das Medium bereit, welches über den Eingang in das Innenvolumen, insbesondere in das Kompensationsvolumen, des Hohlkörpers gelangen kann. Eingangsseitige Druckschwankungen in der Fluidleitung können durch das Kompensationselement zumindest reduziert oder vorzugsweise kompensiert werden. In anderen Worten, eingangsseitige Druckschwankungen werden ausgangsseitig nur noch vermindert oder idealerweise nicht mehr weitergegeben.

Unter Druckschwankungen sind insbesondere Druckstöße oder Druckdifferenzen zu verstehen, welche aufgrund einer dynamischen Druckänderung eines viskosen Mediums in der Fluidleitung entstehen können. Dies kann beispielweise der Druckanstieg in einer Rohrleitung sein, welcher bei einem raschen Schließen oder Öffnen einer Absperrarmatur auftreten kann, oder das Anfahren und Abfahren von Pumpen in der Fluidleitung. In bestimmten Fällen werden dynamische Druckänderungen auch als Druckschlag oder Wasserhammer bezeichnet.

Das Ausmaß eines Druckstoßes ist unterschiedlich und kann von verschiedenen Faktoren abhängen, etwa dem Volumen der Fluidleitung oder der Kompressibilität des Mediums. Im Allgemeinen ist das Ausmaß eines Druckstoßes bei flüssigen Fluiden, welche wenig kompressibel sind, höher als bei gasförmigen Medien, wobei hier auch die Masseträgheit des Fluids eine Rolle spielt.

Druckänderungen werden dabei von Druckwellen weitergegeben, welche im Rahmen der Erfindung auch als Druckschwankungen bezeichnet werden. Hierbei handelt es sich um Longitudinalwellen. Das Abbremsen oder Beschleunigen eines Fluids in einer Fluidleitung erfordert eine gewisse Kraft, welche mit Hilfe des zweiten Newtonschen Gesetzes bestimmt werden kann. Durch die Druckänderungen oder Druckschwankungen können, insbesondere bei inkompressiblen Fluiden wie Wasser, Schwingungen ausgelöst werden, welche die Fluidleitung betreffen können.

Schwingungen können auch durch die Fluidleitung transportiert werden, auch über größere Strecken durch die Fluidleitung, so dass auch hier eine Dämpfung erforderlich sein kann.

Zur Entkoppelung oder Dämpfung der Schwingungen in der Fluidleitung oder der Anlage, oder auch einzelnen Armaturen, können auch Bauelemente wie z.B. Gummi oder Gummiartige Bauelemente, geriffelte Bauelemente, U-Leitungen oder Bälge eingesetzt werden, sofern die Randbedingungen dies erlauben.

Diese Schwingungen der Fluidleitung können zu mehreren unerwünschten Effekten führen, beispielsweise können sich durch Verformungen und Volumenänderungen Abstände zu einer zu kühlenden Anlage oder einem zu kühlenden Gerät ändern, wodurch es zu Spannungen in den zu kühlenden Anlagen oder Geräten kommen kann. Hierdurch können Verformungen des zu kühlenden Bereiches auftreten.

Durch Druckstöße können zudem Schäden an oder in den betroffenen Systemen auftreten. Es können beispielsweise empfindliche Geräte, zum Beispiel Elektronenstrahlgeräte, oder auch Sensoren beeinträchtigt oder sogar beschädigt werden.

So können Rohrleitungen schlimmstenfalls sogar platzen, oder Halterungen der Rohrleitungen können beschädigt werden. Auch die an die Fluidleitung angeschlossene Armaturen, Pumpen oder auch Fundamente können durch Druckstöße beschädigt werden. Problematisch ist, dass bei kleineren Schäden diese häufig nicht sofort sichtbar sind, so dass Folgeschäden auftreten können.

Besonders kritisch können Druckstöße bzw. Druckschwankungen bei Einrichtungen, Maschinen oder Anlagen sein, welche hochempfindlich sind, beispielsweise Anlagen oder Geräte im Bereich der Nanotechnologie oder Elektronenstrahlgeräte mit zum Beispiel hochempfindlichen optischen Einrichtungen.

Dies trifft beispielsweise auf einen Wasserkühlkreislauf zu, an welchen Maschinen, Anlagen oder Einrichtungen der Halbleiterindustrie oder -ausrüstung angeschlossen sind, und welche hochempfindlich auf Druckschwankungen im Wasserkühlkreislauf reagieren bzw. empfindlichen Teile aufweisen. Hier können schon Druckschwankungen in Bereich deutlich unter 1 Pa, beispielsweise in Bereichen unter 0,1 Pa oder auch unter 0,01 Pa, zu Abweichungen führen, die die Prozesse stören oder beeinflussen können, oder geforderte Genauigkeiten können nicht mehr eingehalten werden und/oder Schäden können auftreten.

Da Wasser ein hohes Kompressionsmodul aufweist, welches beispielsweise deutlich höher als das von Öl ist, gilt es als nahezu inkompressibel, so dass sich Druckänderungen rasch und mit hoher Kraft in der Fluidleitung ausbreiten können.

Das erfindungsgemäße Kompensationselement dient der Reduzierung bzw. Kompensation von Druckstößen in Fluidleitungen, so dass Druckschwankungen oder Schwingungen in dem Fluidsystem gedämpft, reduziert oder idealerweise vollständig ausgeglichen werden können. Das erfindungsgemäße Kompensationselement ermöglicht es demnach, den Druck in der Fluidleitung auf einem vorbestimmten Niveau zu halten bei gleichzeitig sehr niedriger Abweichung von diesem Wert.

Der Begriff Dämpfung kann in diesem Zusammenhang als Entfernung von druckbezogener Energie aus dem geschlossenen Flüssigkeitskreislauf betrachtet werden. Es handelt sich in diesem Sinne eher um eine Reduzierung der Druckschwankung im Medium als um eine Dämpfung im Sinne einer Dämpfung von mechanischen Schwingungen. Um diese Energie zu entfernen, ist Arbeit erforderlich, die keinen 100 prozentigen Wirkungsgrad hat und zu einer Wärmeentwicklung führt. Bei der Konstruktion des Kompensationselements sollte sichergestellt werden, dass dem Medium, aus dem die Druckschwankungen abgebaut werden, keine nennenswerte Wärme zugeführt wird.

Im Idealfall führt dies dazu, dass die Eingangsamplitude der Schwingung auf Null abklingt gemessen am Ausgang, so dass eine vollständige Kompensation der auftretenden Schwingung vorliegt. Im Sinne der Erfindung kann eine Dämpfung aber auch dahingehend verstanden werden, dass die Eingangsamplitude der zu dämpfenden Schwingung um wenigstens 50 %, bevorzugt wenigstens 60 % und besonders bevorzugt wenigstens 70 % oder sogar 90 %, 99 % oder darüber, beispielsweise 99,5 % oder darüber, abnimmt. Die Ausgangsamplitude am Ausgang des Kompensationselements beträgt damit vorzugsweise nicht mehr als 50 %, 40 % 30%, 10 % oder sogar 1 % oder weniger, beispielsweise 0,5 % oder weniger, in Bezug auf die Eingangsamplitude. Im Sinne der Erfindung ist weiterhin vorgesehen, dass diese Dämpfung in kürzest möglicher Zeit erfolgt.

Dies betrifft einen Frequenzbereich von etwa 0,01 Hz bis etwa 20 kHz, vorzugsweise von 0,1 Hz bis 100 Hz.

Mit einem Massendurchflussregler ("Mass Flow Controller", MFC) kann zwar ein Massenstrom auf einen Sollwert geregelt werden. In der Regel verfügen sie aber nicht über den geforderten dynamischen Bereich, um einen sehr kleinen oder sehr großen Massenstrom zu steuern und zu regeln, da sie eher träge sind.

Beim Einschalten kann es zu einem zeitlich verzögerten Überschwingen kommen, d.h. der Sollwert kann überschritten bzw. übersteuert werden, aber auch unterschritten bzw. untersteuert werden, was ungünstig für die Erfindung ist, wo es um sehr empfindliche Prozesse geht.

Das erfindungsgemäße Kompensationselement kann daher auch in einem weiteren Aspekt der Erfindung dazu dienen, sehr genau einen konstanten Massenstrom des Fluids vom Ein- bis zum Ausschalten zur Verfügung zu stellen, wobei die Trägheit beim Ein- und Ausschalten niedrig ist.

Im Sinne der Erfindung kann hierzu ein Teil des Innenvolumens des Hohlkörpers, insbesondere das Kompensationsvolumen, genutzt werden, welches aktiv vergrößert oder verkleinert werden kann, um in der Fluidleitung auftretende Druckschwankungen zu kompensieren oder zumindest zu minimieren.

Das Kompensationsvolumen stellt dabei dasjenige Volumen bereit, welches im Betrieb durch den Aktuator gezielt und aktiv verändert werden kann, um Druckschwankungen in der Fluidleitung zu kompensieren. Das Kompensationsvolumen kann dabei im Sinne der Erfindung durch eine aktive Bewegung, beispielsweise eine Hubbewegung, des Aktuators verkleinert oder vergrößert werden. In anderen Worten, der Aktuator ist ausgebildet, um im Betrieb das Kompensationsvolumen zu verändern und auf diese Weise Druckschwankungen in der Fluidleitung zu kompensieren. Der Aktuator kann einen auf einem Magnet-, Piezo-oder elektrostatischem Prinzip basierenden Aktor umfassen. Derartige Aktuatoren zeichnen sich durch ein direktes und rasches Antwortverhalten für ihren vorgesehenen oder geeigneten Einsatzbereich aus und lassen sich zudem sehr genau in ihrer mechanischen Bewegung durch entsprechende elektrische Ansteuerung handhaben. In Weiterbildung der Erfindung sind auch Kombinationen angedacht, wobei auf unterschiedlichen Prinzipien basierende Aktoren miteinander kombiniert werden können, um den Einsatzbereich zu erweitern.

Im Allgemeinen kann durch Anlegen einer Spannung, welche mittels eines Controllers geregelt werden kann, eine Verformung des Aktors bewirkt werden, welche zu einer Volumenänderung des Aktors innerhalb des Hohlkörpers führen kann. Durch eine Vergrößerung des in dem Hohlkörper verbleibenden Kompensationsvolumens kann ein positiver Druckstoß quasi aufgefangen werden. Durch eine Verringerung des Kompensationsvolumens kann eine negative Druckänderung aufgefangen werden.

In einer Ausführungsform der Erfindung ist vorgesehen, für den Aktuator einen Aktor mit einem piezoelektrischen Material auszuwählen, welches in flüssigen Fluiden arbeiten kann bzw. resistent ist gegenüber flüssigen Fluiden.

Gemäß einer Ausführungsform der Erfindung kann der Aktuator geschützt sein, um in Verbindung oder in Kontakt mit aggressiven oder korrosiven Fluiden, insbesondere "Ultrapure Water" und/oder Fluor-haltigen Fluiden, betrieben werden zu können. So können beispielsweise Beschichtungen oder Schutzschichten vorgesehen sein, welche resistent gegenüber den Fluiden sind. Im Fall von aggressiven oder korrosiven Fluiden wie zum Beispiel salzarmen, reinem oder insbesondere hochreinem Wasser ist beispielsweise an geeignete Korrosionsschutz-Beschichtungen gedacht, etwa auf der Basis von oder umfassend Tantal, Inconel, Molybdän oder Kombinationen hiervon. Auch sind beispielsweise PVD-Beschichtungen denkbar. Es versteht sich, dass auch die übrigen Armaturen und/oder Anlagenteile entsprechend geschützt sein sollten.

Auf diese Weise ist es möglich, den Aktuator direkt in dem Innenvolumen anzuordnen. Vorteil dieser Ausführungsform der Erfindung ist es, dass das piezoaktive Material bzw. der Piezo-Aktor direkt in dem Hohlraum platziert werden kann und keine zusätzlichen Einbauten zum Schutz des Aktors nötig werden, da er direkt in Kontakt mit dem Fluid aus der Fluidleitung kommen kann. Auf diese Weise kann das Kompensationselement sehr einfach und kompakt gehalten werden.

Durch eine geeignete Wahl der Geometrie des piezoelektrischen Materials und Anordnung in dem Innenvolumen des Hohlkörpers kann sichergestellt werden, dass die Volumenänderung bzw. die Hubbewegung des piezoelektrischen Materials zu der gewünschten Veränderung des Kompensationsvolumens führen. Das Kompensationsvolumen kann gemäß einer Ausführungsform der Erfindung dasjenige Volumen betreffen, welches sich ergibt, wenn der Aktuator in dem Innenvolumen des Hohlkörpers in einer Ruhestellung, also in seiner normalen Größe ohne elektrische Beeinflussung, angeordnet ist.

In einer Weiterbildung der Erfindung ist vorgesehen, dass die Bewegung des Aktuators an der Eingangsseite des Hohlkörpers größer ist als an der Ausgangsseite. Dies verbessert die Dämpfung bzw. die Absorption von Schwingungen und eine insgesamt bessere Leistung kann erreicht werden. Dies kann beispielsweise erreicht werden, wenn die Öffnungen auf einer Seite des Hohlkörpers angeordnet sind und das piezoelektrische Material innerhalb des Hohlkörpers auf der gegenüberliegenden Seite, wobei der Abstand des piezoelektrische Material zu der Eingangsöffnung geringer ist als zu der Ausgangsöffnung. Bei einer rechteckigen Querschnittsform des Hohlkörpers kann dies beispielsweise sehr einfach durch eine entsprechend geneigte Fläche des Körpers des piezoelektrischen Materials zu den Öffnungen hin realisiert werden. Durch die Neigung kann sich ein Winkel α ergeben, welcher vorzugsweise wenigstens 1°, bevorzugt wenigstens 5° und besonders bevorzugt wenigstens 10° betragen kann.

In einer ebenfalls bevorzugten Ausführungsform der Erfindung ist vorgesehen, dass Innenvolumen mittels einer flexiblen Membran in zwei Teilvolumen zu unterteilen, so dass neben dem Kompensationsvolumen ein zweites Volumen, nachfolgend auch als Ausgleichsvolumen bezeichnet, ausgebildet werden kann. Das Kompensationsvolumen ist dabei wiederum dem an die Öffnungen angrenzenden Raum zugeordnet, so dass es das Medium aus der Fluidleitung aufnehmen kann. Das Kompensationsvolumen innerhalb des Hohlkörpers wird demnach von der flexiblen Membran umschlossen, damit das Medium nicht austreten kann. Der Aktuator kann dazu von Vorteil ebenfalls außerhalb des Kompensationsvolumens angeordnet sein.

Die flexible Membran kann beispielsweise ein Faltenbalg umfassen oder als Faltenbalg ausgebildet sein. Als Material kommen zum Beispiel Elastomere in Betracht, welche eine hinreichende Elastizität für die erforderlichen Verformungen aufweisen.

In Anwendungen unter Vakuum oder Tiefvakuum können allerdings bestimmte Materialien problematisch sein und dementsprechend nicht eingesetzt werden, insbesondere in Verbindung mit aggressiven oder korrosiven Medien. Von daher kommen für die Erfindung insbesondere auch andere Materialien oder auch feste, weniger elastische Materialien in geeigneten Bauformen zur Anwendung, insbesondere metallische Materialien, etwa rostfreier Stahl oder Edelstahl. Im Betrieb kann das Kompensationsvolumen das Medium, etwa ein Fluid aus der Fluidleitung, aufnehmen.

Der Vorteil einer derartigen Anordnung liegt darin, dass der Aktuator durch die flexible Membran vor dem Medium geschützt ist. Dies ermöglicht es, auch andere Materialien oder Aktoren zu verwenden, welche nicht resistent gegenüber den Medien der Fluidleitung sind oder ausgebildet werden können. Das Kompensationsvolumen kann wiederum durch eine entsprechende Bewegung des Aktuators verändert werden wie vorstehend beschrieben.

In einer Weiterbildung der Erfindung ist ein Druckkörper vorgesehen, welcher von dem Aktuator bewegt werden und dabei auf die flexible Membran einwirken kann. Die Krafteinleitung von dem Aktuator auf die flexible Membran kann dadurch verbessert bzw. vereinfacht werden.

Die Bewegung des Aktuators und damit die Größe des Kompensationsvolumens kann von einem Controller gesteuert, welcher von einer elektronischen Rechnereinheit überwacht und geregelt werden kann. Dabei kann mit Hilfe der Rechnereinheit ein Vorgabewert für den Aktuator ermittelt und zur Steuerung der Kompensation an diesen übermittelt werden. Hiermit kann die an dem Aktuator anliegende Spannung gesteuert werden, um die Größe des Kompensationsvolumens zu ändern.

Gemäß einer Ausführungsform der Erfindung erfolgt die Regelung des Aktuators und damit die Größe des Kompensationsvolumens durch die Rechnereinheit anhand der Abweichung des aktuellen Druckes an der Eingangsöffnung von einem vorbestimmten Druck. An der Eingangsöffnung kann sich demnach ein Gesamtdruck einstellen, welcher sich aus dem vorbestimmten Druck P und der Druckdifferenz ΔP_{E} zusammensetzt.

Der eingangsseitige Gesamtdruck ergibt sich demnach zu P_{E} = P + ΔP_{E}. Alternativ oder ergänzend kann auch der Gesamtdruck an einer oder mehreren Stellen in der Fluidleitung gemessen werden auf derjenigen Seite, welche den potentiellen Druckschwankungen ausgesetzt ist.

Hierzu können in der Eingangsöffnung des Hohlkörpers und/oder in der Fluidleitung entsprechende Sensoren oder Druckmessgeräte vorgehen sein, auf welche weiter unten näher eingegangen wird.

Der Rechnereinheit können demnach Daten zu den in der Fluidleitung vorherrschenden Druckverhältnissen zur Verfügung gestellt werden, woraufhin diese einen Vorgabewert für die elektrische Spannung des Aktuators errechnen kann. Der Vorgabewert entspricht demnach derjenigen Spannung, welche an den Aktuator angelegt werden soll, um diesen zu einer Volumenänderung des Kompensationsvolumens zu bewegen, welche die Druckdifferenz ausgleichen kann. Auf diese Weise kann der Aktuator eine an die Abweichung des Druckes ΔP_{E} angepasste Bewegung ausführen, welche durch eine Änderung des Kompensationsvolumens in dem Hohlkörper die Druckdifferenz reduziert oder idealerweise ganz ausgleichen kann. Somit kann eine in der Fluidleitung auftretende Druckschwankung minimiert oder idealerweise vollständig kompensiert werden, so dass für den Gesamtdruck an der Ausgangsöffnung P_{A} gilt: P_{A =} ≈ P oder idealerweise P_{A} = P.

In anderen Worten, bei dieser Ausführungsform der Erfindung ist vorgesehen, das Kompensationsvolumen durch eine entsprechende Bewegung des Aktuators basierend auf der Druckschwankung in der Fluidleitung derart verändert wird, dass am Ausgang des Hohlkörpers der vorbestimmte Wert für den Druck anliegt und die Druckschwankung damit zu Null oder zu nahezu Null beträgt.

Die Regelung des Kompensationselements kann nach dem "Feedback-Control"-Verfahren bzw. als rückgekoppelte Regelung ausgebildet sein, um die Druckschwankung zu reduzieren. Die erforderliche Bewegung des Aktuators wird durch geeignete Filter in der Steuerung bestimmt. Bei der Auslegung der Regelung ist es günstig, nichtlineare und/oder Hystereseeffekte des Aktuators, zum Beispiel des piezoelektrischen Materials, zu berücksichtigen, um ein Überschwingen, also eine zu starke Dämpfung, auszuschließen.

In einer Weiterbildung der Erfindung ist vorgesehen, auch die Strömungsgeschwindigkeit des Mediums, insbesondere des Fluids, bei der Regelung des Kompensationselements zu berücksichtigen. Hierzu können in der Fluidleitung an geeigneter Stelle entsprechende Messeinrichtungen oder Sensoren, beispielsweise Staurohre, vorgesehen sein.

Alternativ oder zusätzlich zu dieser rückgekoppelten Regelung kann in einer weiteren Ausführungsform der Erfindung auch eine "Feedforward"-Verfahren bzw. Störgrößenaufschaltung in die Regelung integriert werden, um die Effektivität noch weiter zu erhöhen. Dafür wird die Druckschwankung auch stromabwärts gemessen, also in der Fluidleitung, welche mit der Ausgangsöffnung des Hohlkörpers verbunden ist, und entsprechend gefiltert in den Regelkreis eingespeist.

Die Erfindung sieht vor, als Regelparameter die auf den Aktuator einwirkende Druckkraft als führende Regelgröße heranzuziehen. Ziel dieser Regelstrategie ist es, den Aktuator so zu steuern, dass die Veränderungen der Druckkraft minimiert bzw. kompensiert werden. Demnach wird die auf den Aktuator einwirkende Kraft so konstant wie möglich gehalten. Hierbei kann zusätzlich nach der Erfindung ein Kraftsensor oder Kraftaufnehmer an dem Aktuator vorgesehen sein, welcher zwischen Aktuator und Kompensationsvolumen angeordnet sein kann, und welche eine Änderung der Druckkraft infolge einer Änderung des Kompensationsvolumens erfasst.

Bei dieser Ausführungsform der Erfindung kann ein Aktuator, beispielsweise ein Piezoaktor, mit einem piezobasierten Kraftsensor kombiniert werden.

Der Vorteil eines piezobasierten Kraftsensors besteht darin, dass er den konstanten Gleichstromdruck nicht messen kann und nur Kraftänderungen sieht. Bei einem derartigen Piezokeramik-Element entsteht durch Krafteinwirkung eine Ladungsverteilung, die proportional zur Kraft ist und gemessen werden kann. Es können sowohl piezobasierte Kraftsensoren zum Messen von Druck- oder Scherkräfte verwendet werden. Ein Vorteil bei der Verwendung von piezobasierten Kraftaufnehmern kann darin gesehen werden, dass diese hochdynamisch messen können.

Der Vorteil dieser Regelstrategie besteht darin, dass kein Drucksensor in oder an der Fluidleitung erforderlich ist. Diese können sehr empfindlich sein, so dass im Betrieb eine aufwendige Überwachung der Funktionalität dieser Sensoren erforderlich sein kann.

Zur Messung des Gesamtdruckes ist in einer Ausführungsform der Erfindung ein besonderer Drucksensor vorgesehen. Dieser ermöglicht es, auch bei einem hohen Druck, beispielsweise bei einem Druck von 50 kPa oder mehr, bevorzugt 100 kPa oder mehr, Schwankungen bzw. Differenzen in dem Gesamtdruck mit einer Genauigkeit von 0,1 Pa oder besser, bevorzugt von 0,05 Pa oder sogar von 0,01 Pa, zu messen.

Der erfindungsgemäße Drucksensor ist dazu ausgebildet, einen Relativdruck zu erfassen. Bei einem solchen Drucksensor wird die Druckdifferenz an zwei Seiten des Sensorelements ausgewertet. Bei gleichem Mitteldruck auf beiden Seiten können Schwankungen im mPa-Bereich gemessen werden. Ein Eingang des Drucksensors kann direkt mit der Fluidleitung verbunden sein. Dadurch kann sichergestellt werden, dass auf dieser Seite alle Druckschwankungen erfasst werden können. Allerdings herrscht auch auf dieser Seite ein hoher Gesamtdruck. Ab einem richtig gewählten Abstand stromabwärts in der Fluidleitung kann die Druckrückführung auf den anderen Eingang des Drucksensors gegeben werden. Durch die Verwendung eines Kapillarröhrchens mit der richtigen Länge und dem richtigen Durchmesser und der Nutzung des Volumens am Drucksensor kann sichergestellt werden, dass Druckschwankungen oberhalb einer bestimmten Frequenz nicht auf diese Seite des Drucksensors gelangen können. Auf diese Weise kann ein Tiefpassfilter ausgebildet werden mit einer Grenzfrequenz, die durch die Geometrie des Kapillarkanals und das Volumen des Drucksensors bestimmt wird. Diese Konstruktion bewirkt, dass der Drucksensor nicht den konstanten Druck misst, sondern nur die Schwankungen oberhalb der Grenzfrequenz des Tiefpassfilters erfasst. Dieses Prinzip kann für den Feed-Forward-Sensor genutzt werden, indem das Kapillarrohr dem Druckaktuator nachgeschaltet wird. Für den Rückmeldesensor sind sowohl der Hauptanschluss als auch das Kapillarrohr dem Druckaktor nachgeschaltet.

Neben den vorstehend genannten Ausführungsformen für ein Kompensationselement zur aktiven Dämpfung von Schwingungen eines Mediums sind verschiedene weitere Ausführungsformen, insbesondere im Hinblick auf den Aktuator und die Sensoren, möglich und angedacht, wovon nachfolgend einige vorgestellt werden sollen. Selbstverständlich ist es auch möglich und angedacht, diese miteinander zu kombinieren. Es versteht sich zudem, dass diese Aufstellung nicht als abschließend zu betrachten ist.

In einer vorteilhaften Ausführungsform der Erfindung kann das Kompensationselement drei aktive Elemente umfassen:
- einen optionalen Drucksensor am Eingang des Kompensationselements, um die Störung zu messen, die in das Kompensationselement eindringt, auf der stromaufwärts gelegenen Seite,
- einen Aktuator, ausgebildet, die Größe des Kompensationsvolumens derart zu verändern, dass die Druckschwankung im Medium beeinflusst werden kann, und
- einen optionalen Drucksensor am Ausgang des Kompensationselements, stromabwärts, welcher als Rückkopplungssensor verwendet werden kann.

Für die meisten Ausführungsformen ist zumindest ein Drucksensor vorgesehen, oder zwei Drucksensoren wie vorstehend beschrieben werden verwendet, was einer Verbesserung der Leistung dienen kann. Diese drei Elemente können zu einer Einheit kombiniert oder auch als drei separate Elemente verwendet werden, die bei Bedarf mit (kurzen) Leitungen, Schläuchen oder Rohrelementen verbunden werden können.

Die Veränderung des Kompensationsvolumens ist ein wichtiger Aspekt der Erfindung. Diese Änderung kann durch ein kolbenartiges Element erfolgen, das sich auf und ab bewegt, aber auch durch Verformung eines geschlossenen Kompensationsvolumens, das die Flüssigkeit enthält. Als Kompensationsvolumens kann auch ein flexibler Schlauch oder ein flexibles Rohr verwendet werden, welches gezielt und steuerbar verformt werden kann, oder eine Art Balgelement, das zusammengedrückt oder gedehnt wird, um die gewünschte Volumenänderung herbeizuführen. So wird in einer Weiterbildung der Erfindung ein Kompensationselement zur aktiven Dämpfung von Schwingungen eines Mediums, insbesondere eines Fluids, zur Verfügung gestellt, wobei ein Hohlkörper mit einem Innenvolumen bereits durch die Fluidleitung bereitgestellt wird.

Das Innenvolumen der Fluidleitung stellt somit das Kompensationsvolumen bereit, welches durch einen Aktuator im Betrieb vergrößert oder verkleinert werden kann. Der Aktuator kann dabei außerhalb des Innenvolumens angeordnet sein. Die Fluidleitung kann dabei zumindest abschnittweise gekrümmt oder mit einer Krümmung ausgebildet sein. Der Aktuator kann dabei zwischen zwei gegenüberliegenden gekrümmten Abschnitten der Fluidleitung angeordnet sein und mit dem Äußeren der Abschnitte fest verbunden sein. Im Betrieb kann der Aktuator eine Zugoder Druckbewegung auf die beiden Abschnitte der Fluidleitung ausüben, so dass diese Abschnitte zusammengezogen oder auseinandergedrückt werden können.

Auf diese Weise lässt sich das durch die Fluidleitung bereitgestellte Innenvolumen in seiner Größe verändern. Es versteht sich, dass die Fluidleitung entsprechend elastisch ausgeführt sein kann, um die Bewegung durch den Aktuator zu unterstützen.

Die Fluidleitung kann hierzu beispielsweise aus einem elastischen Kunststoff gefertigt sein.

Bei Anwendungen unter Vakuum oder Tiefvakuum, bei Anwendungen im Bereich der Lithographie oder bei Elektronenstrahlgeräte, und/oder aggressiven oder korrosiven Medien, können allerdings Kunststoffe problematisch sein und dementsprechend nicht eingesetzt werden. Von daher sind auch metallische Materialien, zum Beispiel rostfreie Stähle oder Edelstähle, vorgesehen, oder alternativ oder ergänzend Beschichtungen, zum Beispiel PVD-Beschichtungen.

Die Krümmung kann dabei auch als Vollkreis bzw. als eine vollständige Windung der Fluidleitung ausgebildet sein. Die Wirkung lässt sich noch weiter steigern, wenn mehr als eine Windung vorgesehen ist, beispielsweise zwei, drei oder vier Windungen.

In einer nochmaligen Weiterbildung dieser Ausführungsform der Erfindung wird ein Kompensationselement zur aktiven Dämpfung von Schwingungen eines Mediums, insbesondere eines Fluids, zur Verfügung gestellt, wobei ein Hohlkörper mit einem Innenvolumen ebenfalls durch die Fluidleitung bereitgestellt wird. Das Innenvolumen der Fluidleitung stellt somit das Kompensationsvolumen bereit, welches durch einen Aktuator im Betrieb vergrößert oder verkleinert werden kann. Der Aktuator kann dabei außerhalb des Innenvolumens angeordnet sein.

Die Fluidleitung kann dabei gemäß dieser Ausführungsform gerade ausgebildet sein. Dabei kann die Fluidleitung über zumindest zwei voneinander beabstandet angeordnete Lagerpunkte fixiert sein, wobei der Aktuator vorzugsweise mittig zwischen diesen beiden Lagerpunkten angeordnet sein kann. Der Aktuator ist mit dem Äußeren der Fluidleitung, vorzugsweise etwa mittig zwischen den beiden Lagerpunkten und diesen gegenüberliegend, verbunden.

Wenn der Aktuator im Betrieb eine Zug- oder Druckkraft auf die Fluidleitung ausübt, kann hierdurch eine radiale Bewegung der Fluidleitung zwischen den beiden Lagerpunkten bewirkt werden, wodurch eine Auslenkung der Fluidleitung in diesem Abschnitt bewirkt werden kann, mittels welcher ebenfalls das Kompensationsvolumen verändert und angepasst werden kann, um eine Druckschwankung zu kompensieren.

In einer nochmaligen Weiterbildung ist vorgesehen, die der Angriffsseite des Aktuators gegenüberliegende Seite der Fluidleitung zu fixieren. Eine Druckkraft durch den Aktuator kann dann die Wandung der Fluidleitung auf der dem Aktuator zugewandten Seite in Richtung der gegenüberliegenden Wandung der Fluidleitung bewegen, so dass das Kompensationsvolumen ebenfalls verkleinert werden kann. Bei dieser Ausführungsform ist gegenüber der vorstehend genannten mit nur zwei Lagerpunkten eine höhere Druckkraft durch den Aktuator notwendig.

Es versteht sich, dass auch bei diesen Ausführungsformen auf eine gewisse Flexibilität bzw. Elastizität der Fluidleitung zu achten ist.

Demnach betrifft die vorliegende Erfindung in einem weiteren Aspekt ein Kompensationselement zur aktiven Dämpfung von Schwingungen eines Mediums, insbesondere eines Fluids, wobei ein Hohlkörper mit einem Innenvolumen bereits durch die Fluidleitung selbst bereitgestellt wird. Die geforderte Volumenänderung zur aktiven Dämpfung von Schwingungen kann durch eine im Wesentlichen radiale Auslenkung der Fluidleitung als Ganzes oder durch Auslenkung nur einer Wand der Fluidleitung mittels des Aktuators im Betrieb bewirkt werden.

In einer nochmaligen Weiterbildung ist vorgesehen, die Fluidleitung in ihrer Längsrichtung flexibel auszubilden. Hierzu kann sie beispielsweise eine Art Faltenbalg umfassen, so dass anstelle einer radialen Auslenkung eine axiale Längenänderung der Fluidleitung ermöglicht wird. Der Aktuator kann hierzu achsparallel angeordnet sein und durch entsprechende Zug- oder Druckkräfte eine Längsänderung der Fluidleitung im Bereich des Faltenbalgs bewirken, wodurch ebenfalls eine Volumenänderung bewirkt werden kann.

Demnach betrifft die vorliegende Erfindung in einem weiteren Aspekt ein Kompensationselement zur aktiven Dämpfung von Schwingungen eines Mediums, insbesondere eines Fluids, wobei ein Hohlkörper mit einem Innenvolumen bereits durch die Fluidleitung selbst bereitgestellt wird, und wobei die geforderte Volumenänderung zur aktiven Dämpfung von Schwingungen kann durch Längsänderung der Fluidleitung bewirkt werden.

Mit von der Erfindung umfasst ist in einem weiteren Aspekt der Erfindung ein Verfahren zum aktiven Dämpfen von Vibrationen eines Mediums, insbesondere eines Fluids, aufweisend die folgenden Schritte:
- Bereitstellen eines erfindungsgemäßen Kompensationselements,
- Erfassen des Gesamtdruckes eines Mediums in einer Fluidleitung mit einem Drucksensor
- Ermitteln der eingangsseitigen Druckdifferenz ΔP_{E} zu einem vorbestimmten Druck P,
- Berechnen eines Vorgabewertes für einen elektrischen Parameter, insbesondere die elektrische Spannung, für einen Aktuator und übermitteln des Vorgabewertes an den Aktuator,
- Ändern des Kompensationsvolumens mittels des Aktuators anhand des Vorgabewertes zur Verkleinerung oder Vergrößerung des Kompensationsvolumens derart, dass durch die Änderung des Volumens die Druckdifferenz kompensiert werden kann.

Nach der Erfindung umfasst das Verfahren dabei ein Kompensationselement wie vorstehend beschrieben.

In einem weiteren Aspekt der Erfindung ist auch ein System zum aktiven Dämpfen von Vibrationen oder Schwingungen eines Mediums, insbesondere eines Fluids, mit umfasst, welches ausgebildet ist zur Ausführung eines Verfahrens zum aktiven Dämpfen von Vibrationen oder Schwingungen eines Mediums, insbesondere eines Fluids, wie vorstehend beschrieben. Das System kann dabei ein Kompensationselement wie vorstehend beschrieben umfassen.

Das erfindungsgemäße System kann sehr vorteilhaft zum Kühlen von Maschinen, Anlagen oder sonstigen Einrichtungen eingesetzt werden, wobei diese Maschinen, Anlagen oder Einrichtungen vor Druckschwankungen und damit verbundenen Schwingungen geschützt sind.

Allgemein können das erfindungsgemäße Kompensationselement oder das erfindungsgemäße System zum aktiven Dämpfen von Vibrationen oder Schwingungen eines Mediums auch eingesetzt werden in verschiedenen Anlagen oder Prozessen, bei denen ein Massenstrom möglichst exakt und/oder rasch auf einen Sollwert geregelt werden soll, und/oder wobei ein zeitlich begrenzter Massenstrom eines Fluids sichergestellt werden soll, beispielsweise auch zum Mischen von Fluiden.

Dies können zum Beispiel auch verschiedene Prozesse oder Anlagen im Bereich der chemischen Industrie, der Halbleiterindustrie, der Lithographie oder auch z.B. Elektronenstrahlgeräte, Reaktorkammern etc. sein.

Das System kann eine Fluidleitung, zumindest teilweise gefüllt mit einem Medium, insbesondere mit einem Fluid wie beispielsweise Wasser oder Öl umfassen, wobei im Betrieb ein bestimmter Gesamtdruck von beispielsweise 1 Pa, 100 Pa, 1kPa, 10 kPa oder sogar 100 kPa eingestellt werden kann.

Das erfindungsgemäße Kompensationselement ermöglicht es, dass in diesem System eine Druckschwankung im Betrieb sichergestellt werden kann, welche +/- 10 mPa oder weniger, bevorzugt +/- 5 mPa oder weniger, besonders bevorzugt +/- 5 mPa oder weniger betragen kann. Damit ermöglicht es die Erfindung, an oder mit Fluidleitungen und damit verbundenen Maschinen, Anlagen oder sonstigen Einrichtungen, etwa im Bereich der Halbleiterindustrie, verwendet zu werden, welche hochempfindlich auf Druck- und/oder Temperaturschwankungen reagieren. Auf diese Weise können zum Beispiel auch Verformungen in oder an den Maschinen,

Anlagen oder sonstigen Einrichtungen, etwa im Bereich der Halbleiterindustrie, verhindert werden.

Angedacht ist hier beispielsweise ein Wasserkühlkreislauf, an welchen Einrichtungen der Halbleiterindustrie oder -ausrüstung angeschlossen sind, und welche empfindlich auf Druckund/oder Temperaturschwankungen im Wasserkühlkreislauf reagieren bzw. empfindlichen Teile aufweisen.

In einem Aspekt betrifft die Erfindung auch ein System zum Kontrollieren eines Massenstromes eines Mediums, insbesondere eines Fluids, umfassend ein erfindungsgemäßes Kompensationselement wie vorstehend erläutert.

Dieses System kann in einem weiteren Aspekt der Erfindung zur Dosierung von Fluiden oder zur Mischung von Fluiden verwendet werden.

Dieser Massenstrom kann z.B. ein in einem Kreislauf umlaufendes Fluid in einer Reaktorkammer betreffen. Ein Blockfluss oder Massenstrom jedweder Art kann auf diese Weise flexibel definiert und besser realisiert werden, da die Trägheit des Systems sehr gering ist.

Weitere Einzelheiten der Erfindung ergeben sich aus der Beschreibung der dargestellten Ausführungsbeispiele und den angefügten Ansprüchen.

*Die Zeichnungen zeigen:*
- Fig. 1: den prinzipiellen Aufbau eines Kompensationselements zur aktiven Dämpfung von Schwingungen eines Mediums in einer Schnittansicht,
- Fig. 2: den prinzipiellen Aufbau eines Kompensationselements zur aktiven Dämpfung von Schwingungen eines Mediums in einer Schnittansicht anhand einer Ausführungsform, bei welcher das Innenvolumen in ein Kompensationsvolumen und ein Ausgleichsvolumen unterteilt ist,
- Fig. 3: den prinzipiellen Aufbau eines erfindungsgemäßen Kompensationselements zur aktiven Dämpfung von Schwingungen eines Mediums in einer Schnittansicht anhand einer Ausführungsform, bei welcher das Innenvolumen in ein Kompensationsvolumen und ein Ausgleichsvolumen unterteilt ist, in einer weiteren Ausführungsform, umfassend einen Kraftsensor an dem Aktuator,
- Fig. 4: ein Ausführungsbeispiel eines Systems zum aktiven Dämpfen von Vibrationen eines Mediums mit einem Kompensationselement,
- Fig. 5: den prinzipiellen Aufbau eines für das Kompensationselement besonders geeigneten Drucksensors,
- Fig. 6: den prinzipiellen Aufbau eines weiteren Kompensationselements zur aktiven Dämpfung von Schwingungen eines Mediums in einer Seitenansicht, wobei der Hohlkörper bereits durch die Fluidleitung bereitgestellt wird, welche zumindest abschnittsweise gekrümmt ist,
- Fig. 7: den prinzipiellen Aufbau eines nochmals weiteren Kompensationselements zur aktiven Dämpfung von Schwingungen eines Mediums in einer Seitenansicht, wobei der Hohlkörper bereits durch die Fluidleitung bereitgestellt wird, und wobei die Fluidleitung zumindest einen geraden Abschnitt umfasst,
- Fig. 8: den prinzipiellen Aufbau eines nochmals weiteren Kompensationselements zur aktiven Dämpfung von Schwingungen eines Mediums in einer Seitenansicht, basierend auf der Ausführungsform aus Fig. 7, mit einer durchgehenden Lagerung der Fluidleitung zumindest in dem geraden Abschnitt,
- Fig. 9: den prinzipiellen Aufbau eines nochmals weiteren Kompensationselements zur aktiven Dämpfung von Schwingungen eines Mediums in einer Seitenansicht, wobei der Hohlkörper bereits durch die Fluidleitung bereitgestellt wird, und wobei die Volumenänderung in Längsrichtung der Fluidleitung erfolgt, und
- Fig. 10: das Antwortverhalten der erfindungsgemäßen Regelung im Vergleich.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

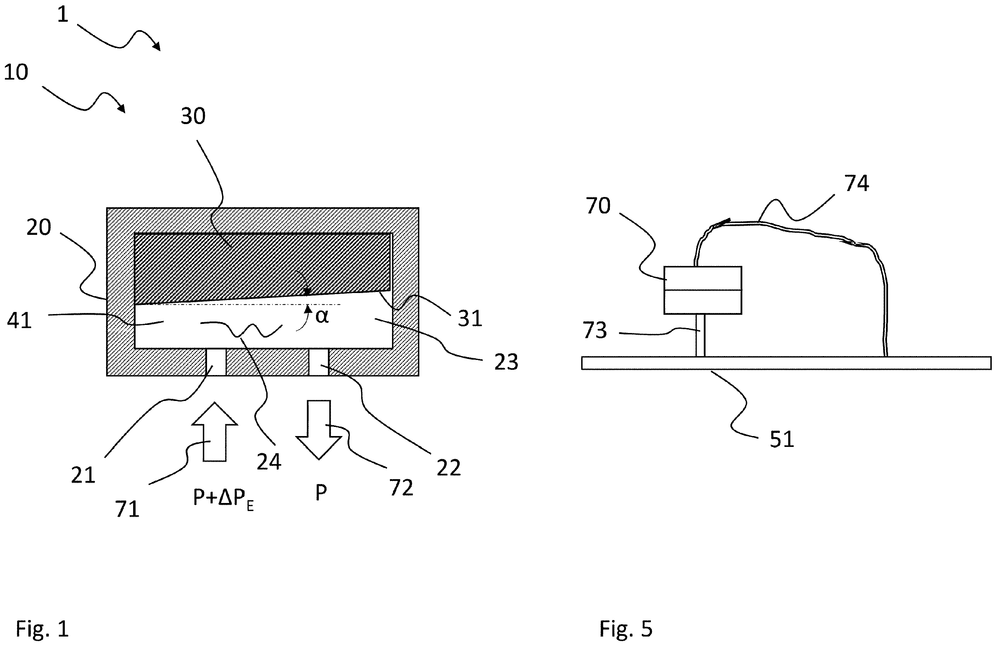

Fig. 1 zeigt in einem Ausführungsbeispiel den prinzipiellen Aufbau eines Kompensationselements 1 zur aktiven Dämpfung von Schwingungen eines Mediums, insbesondere eines Fluid, in der Darstellung durch die geschwungene Linie 24 allein zur Veranschaulichung eingezeichnet, in einer Schnittansicht.

Das Kompensationselement 1 in dem Ausführungsbeispiel der Fig. 1 ist als Kompensationselement 10 ausgebildet mit einem Aktuator 30, welcher in einem Innenvolumen 23 eines Hohlkörpers 20 angeordnet ist.

In den nachfolgenden Figuren sind weitere bevorzugte Ausbildungen und Ausführungsformen von Kompensationselementen 1 gezeigt, welche mit den Bezugszeichen 11, 12, 13, 14, 15 und 16 versehen sind.

Das Kompensationselement 1, 10, 11, 12, 13, 14, 15 und 16 umfasst dabei
- einen Hohlkörper 20, der ein Innenvolumen 23 aufweist,
   wobei in dem Innenvolumen 23 ein Kompensationsvolumen 41 ausgebildet wird,
   wobei der Hohlkörper 20 ferner zumindest zwei Öffnungen 21, 22 aufweist, welche das Kompensationsvolumen 41 mit der Umgebung verbinden können, und
- zumindest einen Aktuator 30, welcher in dem Innenvolumen 23 angeordnet ist und im Betrieb das Kompensationsvolumen 41 vergrößern oder verkleinern kann.

Bei der Auslegung des Kompensationselements 1, 10, 11, 12, 13, 14, 15 und 16 ist darauf zu achten, dass turbulente Strömungen, welche auch durch das Kompensationselement selbst hervorgerufen werden können, soweit wie möglich vermieden werden.

Das Medium 24 kann in gasförmiger oder flüssiger Form vorliegen und umfasst vorliegend ein flüssiges Fluid mit geringer Kompressibilität, beispielsweise Öl oder Wasser. Das Medium 24 ist dabei in einem Rohrleitungssystem, einer Fluidleitung, einer hydraulischen Strecke, einer Druckleitung oder auch allgemein in einem sonstigen geeigneten Behältnis oder Gefäß enthalten.

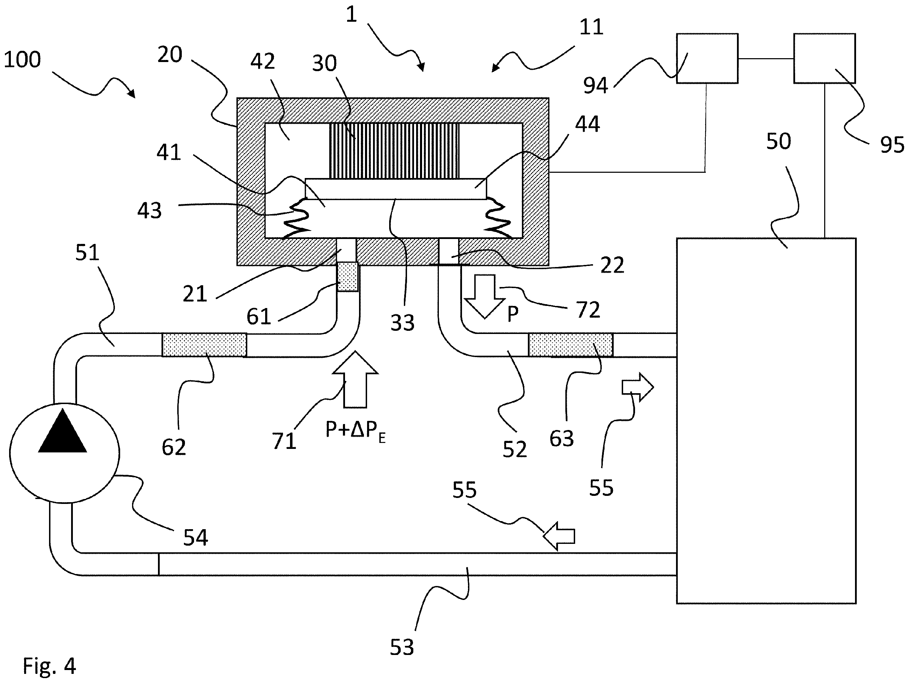

Fluidleitungen 51, 52, 53 sind rein beispielhaft zur Veranschaulichung in der Fig. 4 eingezeichnet, welche ein Ausführungsbeispiel eines Systems 100 zum aktiven Dämpfen von Vibrationen eines Mediums 24, insbesondere eines Fluids, zeigt, wobei das Kompensationselement 11 zum Einsatz kommt. Die Fluidleitung 51 bezeichnet dabei diejenige Fluidleitung, in welcher das Medium 24 zugeführt wird. Dazu kann die Fluidleitung 51 beispielsweise mit einer Pumpe 54 verbunden sein, welche allein zur Veranschaulichung in Fig. 4 eingezeichnet ist.

Die Anordnung ist dabei derart vorgenommen, dass die zu kompensierenden Druckschwankungen in der Fluidleitung 51 auftreten, welche damit in Strömungsrichtung die Zuleitung darstellt. Mit dem Bezugszeichen 52 ist bei den Ausführungsformen der Figuren 1, 2, 3 und 4 diejenige Fluidleitung gekennzeichnet, welche in Strömungsrichtung nach dem Kompensationselement 11 angeordnet ist und hinwegführt. Auf das System 100 der Fig. 4 wird weiter unten vertiefend eingegangen.

In der Fig. 1 ist die Fluidleitung der Übersichtlichkeit halber nicht mit eingezeichnet. Im Betrieb sind die Fluidleitung und das Kompensationsvolumen 41 mit dem viskosen Medium 24, im Beispiel mit einem flüssigen Fluid, gefüllt. In den Ausführungsbeispielen sind die Fluidleitung und das Kompensationsvolumen 41 vollständig mit dem Fluid gefüllt.

Das Medium 24 kann dabei insbesondere auch salzarmes Wasser, reines Wasser sowie hochreines Wasser oder insbesondere auch "Ultrapure Water", wie es für die Halbleiterindustrie gefordert und spezifiziert ist, umfassen. Es ist auch möglich, das Kompensationselement mit Fluor-haltigen Medien, insbesondere Fluiden, etwa Fluor-haltige Flüssigkeiten, insbesondere Wasser, zu verwenden.

Allgemein kann das Medium 24 auch aggressive und/oder korrosive Fluide, also Flüssigkeiten und Gase, umfassen.

Die Öffnungen 21, 22 des Kompensationselements 10 sind im Betrieb mit der Fluidleitung 51, 52 kraft- und/oder formschlüssig verbunden. Hierzu sind geeignete Verbindungsmittel, z.B. Muffen, Verschraubungen oder sonstige geeignete Armaturen zur Ausbildung einer kraft- und/oder formschlüssigen Verbindung zwischen der Fluidleitung 51, 52 und den Öffnungen 21, 22 vorgesehen.

In dem Ausführungsbeispiel sind diese Verbindungen auch zerstörungsfrei lösbar, so dass sowohl ein einfaches Montieren des Kompensationselements gegeben ist als auch ein einfacher Austausch. Zur aktiven Dämpfung der Schwingungen ist das Kompensationselement mit der Fluidleitung 51, 52 mechanisch fest und fluiddicht verbunden. Unter mechanisch fest wird in diesem Zusammenhang verstanden, dass die Verbindung im Betrieb ausreichend auszugs- und vibrationsfest ist, was durch geeignete bauliche Abmessungen und Materialwahl der Fügepartner anwendungsspezifisch sichergestellt ist.

Die erste Öffnung 21 wird im Betrieb als Eingang oder Eingangsöffnung zur Zuführung des Mediums 24 und die weitere Öffnung 22 als Ausgang oder Ausgangsöffnung zur Ableitung des Mediums 24 verwendet, wenn die entsprechenden Fluidleitungen 51, 52 montiert sind.

Die Öffnung 22 des Hohlkörpers 20 stellt somit im Betrieb den Ausgang für das Medium 24 bereit, welches über den Eingang 21 in das Innenvolumen 23 des Hohlkörpers 20 gelangen kann. Druckschwankungen in der das Fluid zuführenden Fluidleitung 51 können durch das Kompensationselement zumindest reduziert oder idealerweise vollständig kompensiert werden. In anderen Worten, eingangsseitige Druckschwankungen werden an oder in die an dem Ausgang 22 angeschlossene Fluidleitung 52 nur noch vermindert oder idealerweise nicht mehr weitergegeben.

Eine am Eingang 21 mit einer Eingangsamplitude auftretende Schwingung wird dabei gedämpft, so dass die Ausgangsamplitude am Ausgang 22 geringer ist als die Eingangsamplitude. Die Ausgangsamplitude am Ausgang 22 des Kompensationselements beträgt damit vorzugsweise nicht mehr als 50 %, 40 %, 30%, 10 % oder sogar 1 % oder weniger, beispielsweise 0,5 % oder weniger, in Bezug auf die Eingangsamplitude.

In der Fig. 1 ist mit dem Bezugszeichen 71 der eingangsseitig anliegende Druck P + ΔP_{E} und mit dem Bezugszeichen 72 der ausgangsseitig anliegende Druck P zur Veranschaulichung eingezeichnet.

Druckschwankungen bzw. Druckstöße können aufgrund dynamischer Druckänderungen entstehen und durch des Medium 24 in der Fluidleitung 51 übertragen werden. Durch zu hohe Druckstöße können Schäden an oder in den betroffenen Systemen 100, bzw. an das System 100 angeschlossene Maschinen 50, Anlagen oder sonstigen Einrichtungen, etwa im Bereich der Halbleiterindustrie, entstehen. Auch die an die Fluidleitung 51, 52 direkt angeschlossene Armaturen, Pumpen 54 oder auch Fundamente können durch Druckstöße beschädigt werden.

Zumindest ein Teil des Innenvolumens 23 des Hohlkörpers 20 ist dazu vorgesehen, als Kompensationsvolumen 41 genutzt zu werden, welches aktiv vergrößert oder verkleinert werden kann, um in der Fluidleitung 51, 52 auftretende Druckschwankungen zu kompensieren oder zumindest zu minimieren. Longitudinalwellen in dem viskosen Medium 24 infolge dieser Druckstöße können durch das Kompensationsvolumen 41 quasi aufgefangen werden.

Das Kompensationsvolumen 41 stellt dabei dasjenige Volumen bereit, welches im Betrieb durch den Aktuator 30 gezielt und aktiv verändert werden kann, um diese Druckschwankungen in der Fluidleitung 51, 52 zu kompensieren. Der Aktuator 30 kann dazu das Kompensationsvolumen 41 durch eine Bewegung, beispielsweise eine Hubbewegung, verkleinern oder vergrößern.

In dem Ausführungsbeispiel aus Fig. 1 ist der Aktuator 30 in dem Innenvolumen 23 des Hohlkörpers 20 an der Innenwandung angeordnet. Dies ermöglicht einen besonders einfachen Aufbau. Die Wahl der Geometrie und damit das durch den Aktuator 30 eingenommene Volumen sind dabei derart ausgewählt, dass sich das Kompensationsvolumen 41 aus dem Restvolumen ergibt, wenn der Aktuator 30 in Ruhestellung in dem Hohlkörper 20 angeordnet ist.

Bei dieser Ausführungsform ist für den Aktuator 30 ein Aktor mit einem piezoelektrischen Material vorgesehen, welcher in flüssigen Medien arbeiten kann bzw. resistent ist gegenüber dem Medium 24.

Hierzu ist der Aktor mit einer Korrosionsschutz-Beschichtung versehen, beispielsweise auf der Basis von Materialien umfassend Tantal, Inconel, Molybdän oder Kombinationen hiervon. Auch PVD-Beschichtungen sind möglich. Auch können bestimmte hochreine Kunststoffe geeignete Materialien sein, umfassend beispielsweise PVDF-HP, ECTFE oder auch keramische Materialien, beispielsweise SiC.

Bei dieser Ausführungsform kann besonders günstig auf weitere Einbauten, etwa zum Schutz des Aktuators 30, verzichtet werden. Auf diese Weise kann das Kompensationselement 10 sehr einfach und kompakt gehalten werden. Die Geometrie und das Material des Aktuators 30 sind derart ausgewählt, dass im Betrieb die Bewegung des piezoelektrischen Materials zu der gewünschten Veränderung des Kompensationsvolumens 41 führt.

Allgemein kann der Aktuator 30 auch andere Geometrien aufweisen oder aus anderen Materialien hergestellt sein und auf einem Magnet-, Piezo-oder elektrostatischem Prinzip basieren. Günstig ist es, wenn der Aktuator 30 über ein direktes und rasches Antwortverhalten verfügt.

Durch Anlegen einer Spannung kann eine Verformung des Aktuators 30 bewirkt werden, welche zu einer Volumenänderung Aktuators 30 innerhalb des Hohlkörpers 20 führt. Durch eine Vergrößerung des Kompensationsvolumens 41 ein positiver Druckstoß quasi aufgefangen werden kann. Eine Verringerung des Kompensationsvolumens kann eine negative Druckänderung bzw. ein Unterdruck auffangen.

Bei der in Fig. 1 gezeigten Ausführungsform ist die Bewegung des Aktuators 30 an und/oder der Abstand des Aktuators 30 zu der Eingangsseite, also im Bereich der Öffnung 21, größer ist als an der Ausgangsseite, also im Bereich der Öffnung 22. Dies verbessert die Dämpfungseigenschaften.

In dem Ausführungsbeispiel wird dies erreicht durch eine geneigte Fläche 31 des Körpers des piezoelektrischen Materials. Durch die Neigung, in der Fig. 1 durch den Winkel α gekennzeichnet, ergibt sich ein unterschiedlich großer Abstand zu den beiden Öffnungen 21, 22. Der Winkel α beträgt wenigstens 1°, bevorzugt wenigstens 5° und besonders bevorzugt wenigstens 10°. In dem abgebildeten Ausführungsbeispiel beträgt der Winkel α etwa 5°.

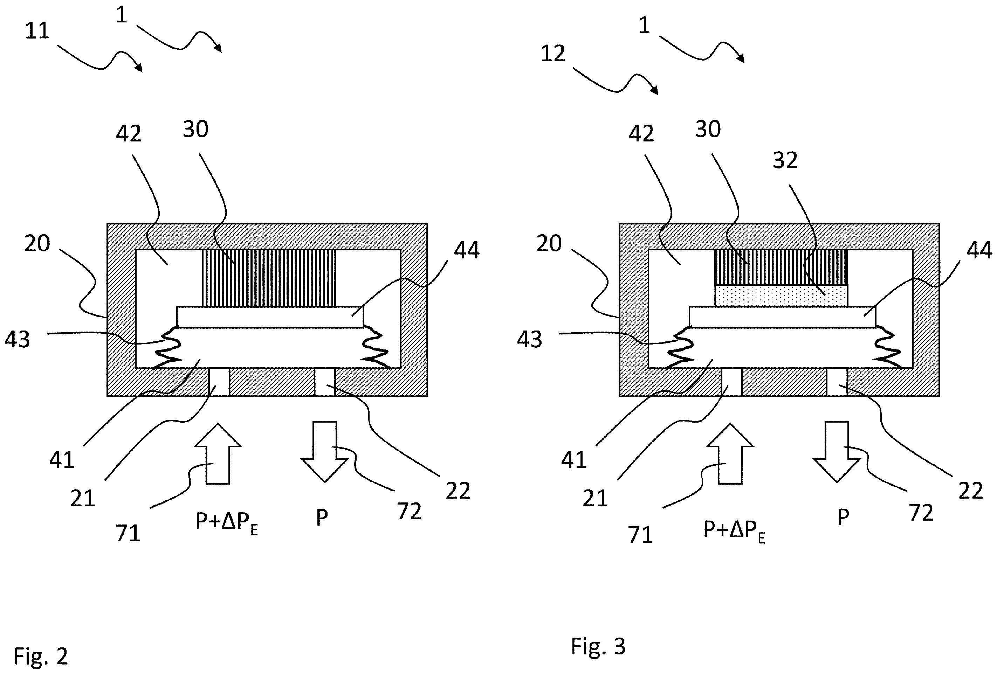

In einer weiteren Ausführungsform ist vorgesehen, dass Innenvolumen 23 in zwei Teilvolumen zu unterteilen. Die Figuren 2 und 3 zeigen den prinzipiellen Aufbau zweier Kompensationselemente 11, 12 zur aktiven Dämpfung von Schwingungen eines viskosen Mediums 24 in einer Schnittansicht anhand von zwei Ausführungsformen, bei welchen das Innenvolumen 23 in ein Kompensationsvolumen 41 und ein Ausgleichsvolumen 42 unterteilt ist, in einer Schnittansicht.

Hierbei ist eine flexible Membran 43 vorgesehen, welche das Kompensationsvolumen 41 abtrennt, wodurch sich in dem Innenvolumen 23 ein Ausgleichsvolumen 42 einstellt. Das Kompensationsvolumen 41 ist dabei wiederum dem an die Öffnungen angrenzenden Raum zugeordnet, so dass es das Medium 24 aus der Fluidleitung 51, 52 aufnehmen kann. Das Kompensationsvolumen 41 wird demnach innerhalb des Hohlkörpers 20 von der flexiblen Membran 43 umschlossen, damit das Medium 24 nicht austreten kann.

Vorteil dieser Ausführungsformen ist es, dass beispielsweise der Aktuator 30 geschützt außerhalb des Kompensationsvolumens 41 angeordnet ist und auf diese Weise vor direkter Einwirkung durch das Medium 24 geschützt ist. Dies ermöglicht es, auch andere Materialien oder Aktoren zu verwenden, welche nicht resistent gegenüber den viskosen Medien 24 sind. Das Kompensationsvolumen 41 kann wiederum durch eine entsprechende Bewegung des Aktuators 30 verändert werden.

Die flexible Membran 43 kann beispielsweise ein Faltenbalg umfassen oder als Faltenbalg ausgebildet sein, wie es die Figuren 2 und 3 andeuten. Als Material kommen allgemein Elastomere in Betracht, welche eine hinreichende Elastizität für die erforderlichen Verformungen aufweisen, beispielsweise Gummi, oder auch metallische Werkstoffe wie rostfreie Stähle oder Edelstähle in entsprechender Bauweise. Bei der Auswahl ist darauf geachtet, dass die erforderlichen und im Betrieb auftretenden Druckwerte ausgehalten werden können.

Im Betrieb nimmt das Kompensationsvolumen 41 das Medium 24, etwa ein Fluid aus der Fluidleitung 51, auf. In der in Fig. 2 gezeigten Ausführungsform des Kompensationselements 11 ist ein Druckkörper 44 vorgesehen, welcher von dem Aktuator 30 bewegt werden und dabei auf die flexible Membran 43 einwirken kann. Die Krafteinleitung von dem Aktuator 30 auf die flexible Membran 43 kann dadurch verbessert bzw. vereinfacht werden.

Die Bewegung des Aktuators 30 und damit die Größe des Kompensationsvolumens 41 wird von einem Controller 94 gesteuert, welcher von einer elektronischen Rechnereinheit 95 überwacht und geregelt wird.

Dabei ermittelt die Rechnereinheit anhand hinterlegter Programme oder Wertetabellen einen Vorgabewert für den Aktuator 30, welcher zur Steuerung der Kompensation an diesen übermittelt wird. Hierzu kann der Controller oder auch ein anderes zur Steuerung geeignetes Element eingesetzt werden. Der Vorgabewert betrifft zumindest einen elektrischen Parameter, im Ausführungsbeispiel die an dem Aktuator 30 anliegende Spannung. Die Bewegung des Aktuators 30 bzw. seine Ausdehnung wird durch die anliegende Spannung gesteuert. Hierdurch wird die Größe des Kompensationsvolumens 41 entsprechend beeinflusst und eingestellt.

Gemäß einer bevorzugten Ausführungsform erfolgt die Regelung des Aktuators 30 und damit die Größe des Kompensationsvolumens 41 durch die Rechnereinheit anhand der Abweichung des aktuellen Druckes von einem vorbestimmten Druck an der Eingangsöffnung 21. An der Eingangsöffnung 21 liegt demnach im Betrieb ein Gesamtdruck an, welcher sich aus dem vorbestimmten Druck P und der Druckdifferenz ΔP_{E} zusammensetzt.

Der eingangsseitige Gesamtdruck ergibt sich demnach zu P_{E} = P + ΔP_{E}. Alternativ oder ergänzend kann auch der Gesamtdruck an einer oder mehreren Stellen in der Fluidleitung 51 gemessen werden auf derjenigen Seite, welche den potentiellen Druckschwankungen ausgesetzt ist.

In der Fig. 4 ist dies schematisch durch die zwei Drucksensoren 61, 62 dargestellt, welche zum einen dem Eingang 21 und zum anderen der Fluidleitung 51 zugeordnet sind. Ist der Drucksensor 62 der Fluidleitung 51 in einem hinreichenden Abstand zu der Öffnung 21 angeordnet, so kann sich eine gewisse Vorlaufzeit einstellen, welche sich darauf ergibt, dass eine im Betrieb auftretende Druckänderung stromabwärts zuerst durch den Drucksensor 62 und zeitversetzt durch den Drucksensor 61 erfasst wird. Dies ermöglicht es, den Aktuator 30 proaktiv anzusteuern, so dass die Druckdifferenz noch besser kompensiert werden kann. Die Ansteuerung des Aktuators 30 erfolgt dabei in Echtzeit. Auf diese Weise kann eine Druckdifferenz in Echtzeit ausgeglichen werden.

Die Regelung ist dazu von Vorteil mit hoher Bandbreite ausgebildet, so dass sie auf sehr langsame Änderungen, etwa im Bereich von weniger als 0,01 Hz, aber auch auf hohe Frequenzen bis zu 10 kHz reagieren kann. Dies kann sowohl analog als auch digital erfolgen. Eine grundsätzlich geeignete Regelung ist dem Dokument EP 1 840 681 A1 der Anmelderin zu entnehmen, welche hiermit vollumfänglich zum Gegenstand der vorliegenden Erfindung gemacht wird und somit vollständig inkorporiert wird.

Mittels hinterlegter Algorithmen ermittelt die Rechnereinheit, basierend auf den Daten der Drucksensoren 61, 62, einen Vorgabewert für die elektrische Spannung, welche an dem Aktuator 30 anliegen soll.

Anstelle fest programmierter Algorithmen für die Steuerung bzw. Regelung des Kompensationselements ist in einer Weiterbildung der Erfindung auch angedacht, Methoden des "machine learnings" oder auch künstliche neuronale Netze zur Regelung unterstützend einzusetzen.

Dies kann beispielsweise dann hilfreich sein, wenn mehrere Kompensationselemente mit mehreren Aktuatoren gemeinsam gesteuert und geregelt werden sollen, und/oder wenn mehrere Kompensationselemente zu einem größeren, komplexen Verbund oder Netz von Fluidleitungen zusammengeschlossen sind. Für die Steuerung bzw. die Regelstrategie können in einer nochmaligen Weiterbildung dann auch weitere Daten oder Parameter anderen an den Verbund angeschlossene Anlagen, Maschinen oder Systeme mit berücksichtigt werden, beispielsweise Raumtemperaturen oder Temperaturen an oder in den Anlagen oder Maschinen 50.

Für die Regelung können auch PID-Regler eingesetzt werden.

Auf diese Weise kann die Aktuator-Regelung in einen selbstlernenden Modus überführt werden, und beispielsweise bestimmte Strukturen in den Druckänderungen erkennen, so dass noch rascher und noch exakter die Kompensation erfolgen kann. Hierzu können auch an mehreren Stellen in der Fluidleitung 51, 52, 53 Drucksensoren angeordnet sein, beispielsweise stromaufwärts nach Pumpen, Ventilen oder ähnlichen Armaturen, so dass Informationen über Druckänderungen sehr früh erfasst werden können.

So ist es in einer Ausführungsform auch vorgesehen, die Strömungsgeschwindigkeit des Mediums 41, insbesondere des Fluids, bei der Regelung des Kompensationselements zu berücksichtigen.

Der Aktuator 30 führt eine an die Abweichung des Druckes ΔP_{E} angepasste Bewegung aus, so dass in dem Hohlkörper 20 durch Anpassung des Kompensationsvolumens 41 die Druckdifferenz reduziert oder idealerweise ganz ausgleichen wird. Somit kann eine in der Fluidleitung 51 auftretende Druckschwankung minimiert oder idealerweise vollständig kompensiert werden, so dass für den Gesamtdruck P_{A} an der Ausgangsöffnung 22 gilt: P_{A} = ≈ P oder idealerweise P_{A} = P, und damit ΔP_{E} ≈ 0 Pa oder ΔP_{E} = 0 Pa.

Die Regelung erfolgt in einer Ausführungsform nach dem "Feedback-Control"-Verfahren bzw. als rückgekoppelte Regelung. Die erforderliche Bewegung des Aktuators 30 wird durch geeignete Filter in einer Steuerung bestimmt. Bei der Auslegung der Regelung werden nichtlineare und/oder Hystereseeffekte des Aktuators 30, zum Beispiel des piezoelektrischen Materials, bereits mitberücksichtigt, um ein Überschwingen, also eine zu starke Dämpfung, auszuschließen.

Alternativ oder zusätzlich zu dieser rückgekoppelten Regelung kann in einer weiteren Ausführungsform auch eine "Feedforward"-Verfahren bzw. Störgrößenaufschaltung in die Regelung integriert werden, um die Effektivität noch weiter zu erhöhen. Dafür wird die Druckschwankung auch stromabwärts gemessen, also in dem Ausführungsbeispiel in der Fluidleitung 52, welche mit der Ausgangsöffnung 22 des Hohlkörpers 20 verbunden ist. In der Fig. 4 ist rein beispielhaft hierzu ein weiterer Drucksensor 63 eingezeichnet.

Während bei diesen Ausführungsformen die Drucksensoren den das Medium 24 führenden Bauteilen, also den Eingängen 21, 22 oder den Fluidleitungen 51, 52, zugeordnet ist, ist in Fig. 3 eine Ausführungsform eines Kompensationselements 12 gezeigt, welche auf der Ausführungsform der Fig. 2 beruht, aber zusätzlich erfindungsgemäß einen Kraftsensor oder Kraftaufnehmer 32 an dem Aktuator 30 umfasst, und welcher demnach zwischen Aktuator 30 und Kompensationsvolumen 41 angeordnet ist.

In dem Ausführungsbeispiel ist der Kraftsensor 32 zwischen dem Aktuator 30 und der Druckplatte 44 angeordnet. Bei dieser Ausführungsform der Erfindung ist als Regelparameter die auf den Aktuator 30 einwirkende Druckkraft als führende Regelgröße herangezogen. Die Kraftdifferenz ΔF ergibt sich dabei wie folgt: ΔF = ΔP_{E} * A, mit A = Größe der Einwirkfläche. Das Ziel der Regelung ist in diesem Fall, die auf den Aktuator 30 einwirkende Kraftdifferenz zu minimieren oder idealerweise vollständig zu kompensieren, so dass gilt: ΔF ≈ 0 N oder ΔF = 0 N.

Die Änderung des Kompensationsvolumen 41 im Betrieb erfolgt dabei in Abhängigkeit der auf den Aktuator 30 einwirkenden Druckkraft. Der Vorteil dieses Verfahrens besteht darin, dass kein Drucksensor in oder an der Fluidleitung 51, 52 erforderlich ist.

Zur Messung des Gesamtdruckes ist in einer Ausführungsform ein besonderer Drucksensor 70 vorgesehen, welcher besonders gut zusammen mit dem Kompensationselement verwendet werden kann. Dieser ist in einem prinzipiellen Aufbau schematisch in Fig. 5 gezeigt ist.

Der Drucksensor 70 erfasst einen Relativdruck in der Fluidleitung 51, wobei die Druckdifferenz an zwei Seiten des Sensorelements ausgewertet wird. Bei gleichem Mitteldruck auf beiden Seiten können Schwankungen im mPa-Bereich gemessen werden.

Ein Eingang des Drucksensors 70 ist über eine Zuleitung 73 direkt mit der Fluidleitung 51 verbunden. Dadurch kann sichergestellt werden, dass auf dieser Seite alle Druckschwankungen erfasst werden können. Ab einem bestimmten Abstand stromabwärts in der Fluidleitung 51 erfolgt eine Druckrückführung auf den zweiten Eingang des Drucksensors 70. Durch die Verwendung eines Kapillarröhrchens 74 mit der richtigen Länge und dem richtigen Durchmesser und der Nutzung des Volumens am Drucksensor 70 kann sichergestellt werden, dass Druckschwankungen oberhalb einer bestimmten Frequenz nicht auf diese Seite des Drucksensors gelangen können. Auf diese Weise wird ein Tiefpassfilter ausgebildet mit einer Grenzfrequenz, die durch die Geometrie des Kapillarkanals 74 und das Volumen des Drucksensors 70 bestimmt wird. Diese Konstruktion bewirkt, dass der Drucksensor 70 nicht den konstanten Druck misst, sondern nur die Schwankungen oberhalb der Grenzfrequenz des Tiefpassfilters erfasst. Dieses Prinzip kann für das Feed-Forward-Verfahren genutzt werden.

Auf diese Weise ist es möglich, auch bei einem hohen Druck, beispielsweise bei einem Druck von 50 kPa oder mehr, bevorzugt 100 kPa oder mehr, Schwankungen bzw. Differenzen in dem Gesamtdruck mit einer Genauigkeit von 0,1 Pa oder besser, bevorzugt von 0,05 Pa oder sogar von 0,01 Pa, zu messen.

Weitere geeignete Druckmessverfahren können Laserinterferometer umfassen, um Druckdifferenzen radial und/oder axial auch in einer Fluidleitung zu messen, oder auch Beschleunigungssensoren.

Für die Erfindung besonders geeignet sind Messverfahren oder Sensoren, die eine Messung der Druckdifferenz ermöglichen.

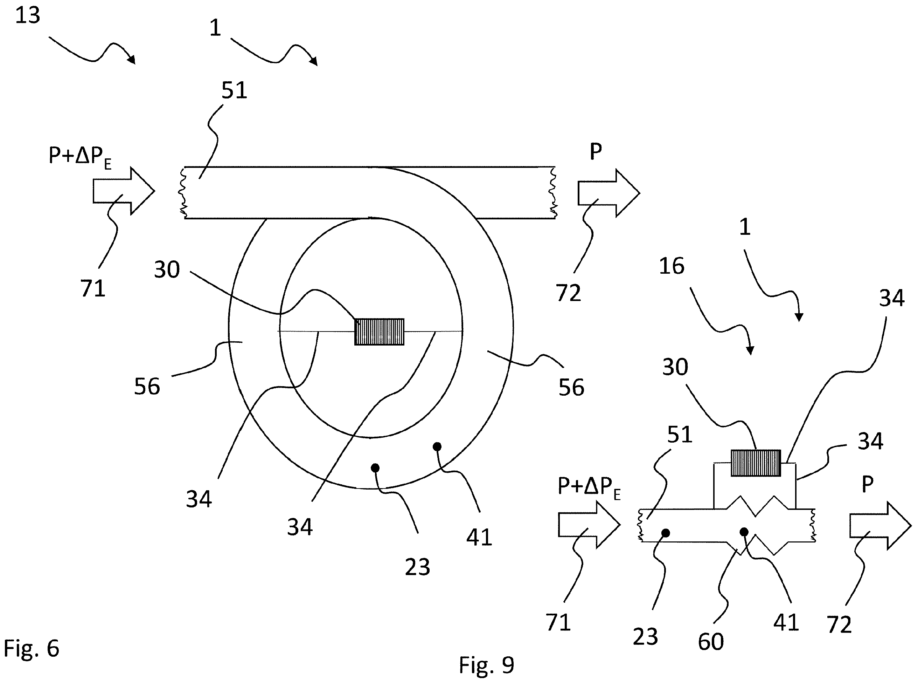

Fig. 6 zeigt den prinzipiellen Aufbau eines weiteren Kompensationselements 13 zur aktiven Dämpfung von Schwingungen eines Mediums 24 in einer Seitenansicht, wobei der Hohlkörper bereits durch die Fluidleitung 51 bereitgestellt wird. Diese ist zumindest abschnittsweise gekrümmt ausgebildet.

Das Innenvolumen 23 der Fluidleitung 51, 52 stellt somit das Kompensationsvolumen 41 bereit, welches durch den Aktuator 30 im Betrieb vergrößert oder verkleinert werden kann. Der Aktuator 30 ist in dieser Ausführungsform außerhalb des Innenvolumens 23 angeordnet. Die Fluidleitung 51 ist dabei zumindest abschnittweise gekrümmt oder mit einer Krümmung ausgebildet.

Der Aktuator 30 ist dabei zwischen zwei gegenüberliegenden gekrümmten Abschnitten 56 der Fluidleitung 51 angeordnet und mit diesen Abschnitten 56 fest verbunden. Im Betrieb kann der Aktuator 30 eine Zug- oder Druckbewegung auf die beiden Abschnitte 56 der Fluidleitung 51 ausüben, so dass diese Abschnitte 56 zusammengezogen oder auseinandergedrückt werden können. Hierzu können weitere Kraftübertragungselemente 34, beispielsweise Stäbe oder Rohre, vorgesehen sein.

Auf diese Weise lässt sich das durch die Fluidleitung 51, 52 bereitgestellte Innenvolumen 23 in seiner Größe verändern. Es versteht sich, dass die Fluidleitung 51 entsprechend elastisch ausgeführt ist, und beispielsweise aus einem elastischen Kunststoff gefertigt sein kann. In dem Ausführungsbeispiel ist ein Schlauch vorgesehen.

Die Krümmung kann dabei, wie in dem Ausführungsbeispiel gezeigt, als Vollkreis bzw. als eine vollständige Windung der Fluidleitung 51 ausgebildet sein. Die Wirkung lässt sich noch weiter steigern, wenn mehr als eine Windung vorgesehen ist, beispielsweise zwei, drei oder vier Windungen.

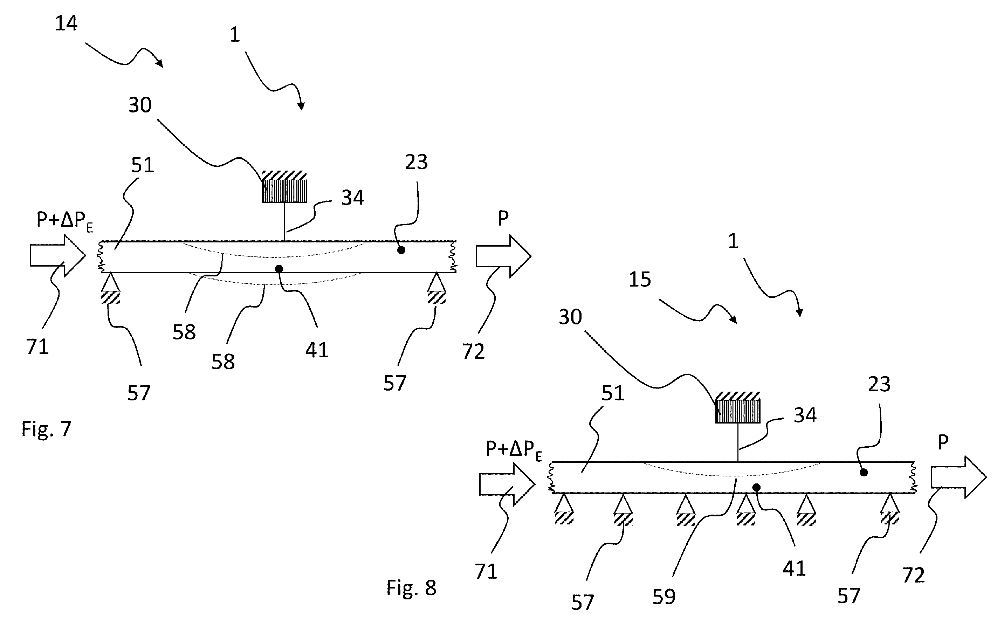

Fig. 7 zeigt den prinzipiellen Aufbau eines nochmals weiteren Kompensationselements 14 zur aktiven Dämpfung von Schwingungen eines Mediums 24 in einer Seitenansicht, wobei der Hohlkörper ebenfalls bereits durch die Fluidleitung 51 bereitgestellt wird. Anstelle eines gekrümmten Abschnittes umfasst die Fluidleitung 51 gemäß dieser Ausführungsform zumindest einen geraden Abschnitt.

Der Aktuator 30 ist ebenfalls außerhalb des Innenvolumens 23 angeordnet. Die Fluidleitung 51 ist über zwei voneinander beabstandet angeordnete Lagerpunkte 57 fixiert, wobei der Aktuator 30 mit seinem Kraftangriffspunkt etwa mittig zwischen diesen beiden Lagerpunkten 57 angeordnet ist. Der Aktuator 30 ist mit dem Äußeren der Fluidleitung 51 fest verbunden.

Wenn der Aktuator im Betrieb eine Zug- oder Druckkraft auf die Fluidleitung 51 ausübt, kann hierdurch eine radiale Bewegung der Fluidleitung 51 zwischen den beiden Lagerpunkten 57 bewirkt werden, wodurch eine Auslenkung der Fluidleitung 51 in diesem Abschnitt bewirkt werden kann. Auf diese Weise kann das Kompensationsvolumen 41 verändert und angepasst werden kann, um eine Druckschwankung zu kompensieren. Mit dem Bezugszeichen 58 ist eine mögliche Auslenkung der Fluidleitung 51 bei Aufbringen einer Druckkraft durch den Aktuator 30 zur Veranschaulichung mit eingezeichnet.

Fig. 8 zeigt den prinzipiellen Aufbau eines nochmals weiteren Kompensationselements 15 zur aktiven Dämpfung von Schwingungen eines Mediums 24 in einer Seitenansicht, basierend auf der Ausführungsform aus Fig. 7. Anders als bei der Ausführungsform der Fig. 7 ist die der Angriffsseite des Aktuators 30 gegenüberliegende Seite der Fluidleitung 51 fixiert. In dem Ausführungsbeispiel sind hierzu mehrere Lagerpunkte 57 vorgesehen.

Eine Druckkraft durch den Aktuator 30 kann die Wandung der Fluidleitung 51 auf der dem Aktuator 30 zugewandten Seite in Richtung der gegenüberliegenden Wandung der Fluidleitung 51 bewegen, so dass das Kompensationsvolumen 41 ebenfalls verkleinert werden kann. Bei dieser Ausführungsform ist gegenüber der vorstehend genannten mit nur zwei Lagerpunkten 57 eine höhere Druckkraft durch den Aktuator 30 notwendig. Mit dem Bezugszeichen 59 ist eine mögliche Auslenkung der Fluidleitung 51 bei Aufbringen einer Druckkraft durch den Aktuator 30 zur Veranschaulichung mit eingezeichnet.

Bei diesen Ausführungsformen des Kompensationselements 13, 14 und 15 ist auf eine gewisse Flexibilität bzw. Elastizität der Fluidleitung 51 zu achten.

Fig. 9 zeigt den prinzipiellen Aufbau eines nochmals weiteren Kompensationselements 16 zur aktiven Dämpfung von Schwingungen eines Mediums 24 in einer Seitenansicht, wobei der Hohlkörper bereits durch die Fluidleitung 51 bereitgestellt wird, und wobei die Volumenänderung in Längsrichtung der Fluidleitung 51 erfolgt. Bei dieser Ausführungsform ist die Fluidleitung 51 in ihrer Längsrichtung flexibel ausgebildet Hierzu ist eine Faltenbalg 60 vorgesehen, so dass eine axiale Längenänderung der Fluidleitung 51 ermöglicht wird. Der Aktuator 30 ist hierzu achsparallel angeordnet und kann durch entsprechende Zug- oder Druckkräfte eine Längsänderung der Fluidleitung 51 im Bereich des Faltenbalgs 60 bewirken, wodurch ebenfalls eine Volumenänderung des Kompensationsvolumens 41 bewirkt werden kann.

Die Fluidleitung kann allgemein aus Kunststoff gefertigt sein und beispielsweise auch Elastomere umfassen.

Für Anwendungen, welche einen Kontakt mit aggressiven oder korrosiven Fluiden erfordern, beispielsweise Ultrapure Water, und/oder welche im Vakuum oder Tiefvakuum arbeiten, bieten sich besondere Materialien und/oder Beschichtungen oder Schutzschichten an, welche resistent gegenüber den Fluiden sind.

Im Fall von aggressiven oder korrosiven Fluiden wie zum Beispiel salzarmen, reinem oder insbesondere hochreinem Wasser ist beispielsweise an geeignete Korrosionsschutz-Beschichtungen gedacht, etwa auf der Basis von oder umfassend Tantal, Inconel, Molybdän oder Kombinationen hiervon. Auch sind beispielsweise PVD-Beschichtungen denkbar. Auch metallische Werkstoffe, umfassend rostfreie Stähle oder Edelstahl, können geeignet sein für die Fluidleitung.

Auch können bestimmte Kunststoffe, welche zum Beispiel vakuumtauglich sind, geeignete Materialien darstellen, umfassend beispielsweise PVDF-HP, ECTFE, oder auch keramische Materialien, beispielsweise SiC.

Mit von der Erfindung umfasst ist in einem weiteren Aspekt der Erfindung ein Verfahren zum aktiven Dämpfen von Vibrationen eines Mediums 24, insbesondere eines Fluids, aufweisend die folgenden Schritte:
- Bereitstellen eines Kompensationselements 1, 10, 11, 12, 13, 14, 15, 16 nach der Erfindung,
- Erfassen des Gesamtdruckes eines Mediums 24 in einer Fluidleitung 51, 52, 53 mit einem Drucksensor 61, 62, 63, 70,
- Ermitteln der eingangsseitigen Druckdifferenz ΔP_{E} zu einem vorbestimmten Druck P,
- Berechnen eines Vorgabewertes für einen elektrischen Parameter, insbesondere die elektrische Spannung, für einen Aktuator 30 und übermitteln des Vorgabewertes an den Aktuator 30,
- Ändern des Kompensationsvolumens 41 mittels des Aktuators 30 anhand des Vorgabewertes zur Verkleinerung oder Vergrößerung des Kompensationsvolumens 41 derart, dass durch die Änderung des Volumens die Druckdifferenz kompensiert werden kann.

In einem weiteren Aspekt der Erfindung ist auch ein System 100 zum aktiven Dämpfen von Vibrationen eines viskosen Mediums 24, insbesondere eines Fluids, mit umfasst, welches ausgebildet ist zur Ausführung eines Verfahrens zum aktiven Dämpfen von Vibrationen eines Mediums 24, insbesondere eines Fluids, wie vorstehend beschrieben.

Das System 100 umfasst dabei ein Kompensationselement 1. Fig. 4 zeigt ein Ausführungsbeispiel eines derartigen Systems 100 zum aktiven Dämpfen von Vibrationen eines viskosen Mediums allein beispielhaft mit einem Kompensationselement 11, wobei anstelle des Kompensationselement 11 auch andere Kompensationselemente 10, 12, 13, 14, 15, 16 verwendet werden können.

Das System 100 umfasst eine Fluidleitung 51, 52 als Zuleitung für eine rein beispielhaft skizzierte Maschine 50, Anlage oder Einrichtung, welche mit einem Medium 24, im Beispiel demineralisiertes Wasser für einen Kühlkreislauf, vollständig gefüllt ist. Im Betrieb kann in dem System 100 ein Gesamtdruck von beispielsweise 1 Pa, 100 Pa, 1kPa, 10 kPa oder sogar 100 kPa eingestellt werden.

In der Fig. 4 ist ferner eine Fluidleitung 53 eingezeichnet, welche von der Maschine 50 hinwegführt. Die Strömungsrichtung ist mit dem Bezugszeichen 55 eingezeichnet.

Das Kompensationselement ermöglicht es, dass in diesem System 100 eine Druckschwankung im Betrieb sichergestellt werden kann, welche +/- 10 mPa oder weniger, bevorzugt +/- 5 mPa oder weniger, besonders bevorzugt +/- 5 mPa oder weniger betragen kann.

Für das in Fig. 4 dargestellte Ausführungsbeispiel eines Systems 100 zum aktiven Dämpfen von Vibrationen eines Mediums mit einem Kompensationselement ist ein Durchfluss von nominal 2 L/min vorgesehen, wobei ein Schlauch mit 8 mm Innendurchmesser verwendet wird. Der Nenndruck beträgt 1,3 bar. Das Kompensationsvolumen wird mit einer Hubfläche 33 von 25 mm² bereitgestellt, welche mittels des Aktuators 30 um ± 5 µm bewegt werden kann. Hiermit kann beispielsweise eine Druckstörung in einem Bereich von etwa 50 bis 150 Pa, beispielsweise 100 Pa, bei 3 Hz kompensiert werden.

Bei einer Frequenz von beispielsweise 30 Hz können Druckstöße um etwa 1000 Pa mit einer ähnlichen Hubbewegung ausgeglichen werden. Dies reicht bereits aus, um die Druckschwankungen in vielen anspruchsvollen Anwendungen zu reduzieren. Es versteht sich, dass die Hubfläche und/oder die Hubbewegung entsprechend angepasst werden können, um das Kompensationselement 1 auch bei anderen Betriebsparametern betreiben zu können, und an den verfügbaren Bauraum oder die gewählte Antriebstechnik anzupassen.

Damit ermöglicht es die Erfindung, an oder mit Maschinen 50, Anlagen oder sonstigen Einrichtungen, etwa im Bereich der Halbleiterindustrie, verwendet zu werden, welche hochempfindlich auf Druckschwankungen reagieren, und welche beispielsweise gekühlt werden müssen.

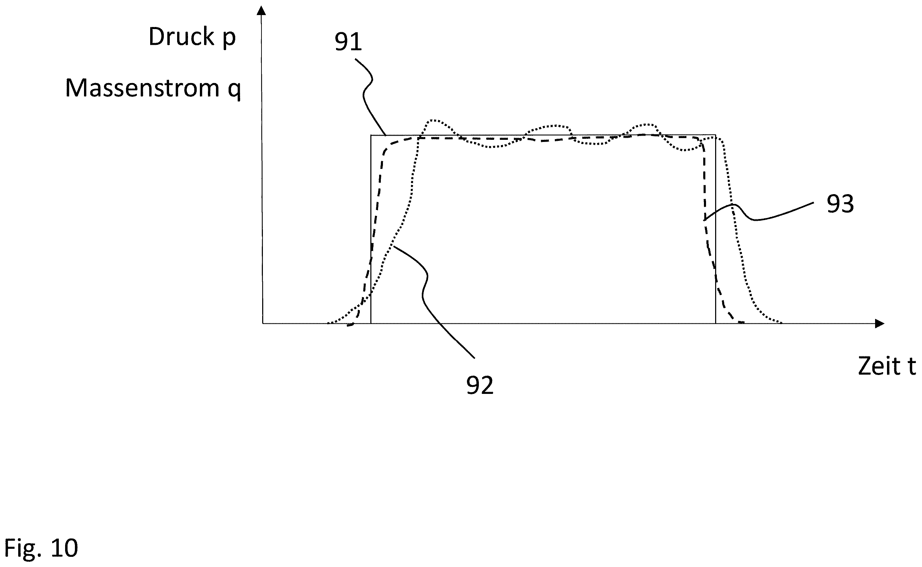

Fig. 10 zeigt das Antwortverhalten der erfindungsgemäßen Regelung in einem Vergleich anhand eines einfachen Beispiels.

Mit dem Bezugszeichen 91 ist eine gewünschte Druckänderung im Zeitverlauf t dargestellt.

Mit dem Bezugszeichen 92 ist das Antwortverhalten eines klassischen Massendurchflussregler ("Mass Flow Controller", MFC) eingezeichnet. Es zeigen sich über den Zeitverlauf zum Teil relativ deutliche Abweichungen von dem Sollwert für den Druck p, wobei alternativ auch ein Massenstrom q angenommen sein kann.

Mit dem Bezugszeichen 93 schließlich ist das Antwortverhalten eingezeichnet, welches mit dem Kompensationselement 1, 10, 11, 12, 13, 14, 15, 16 erreicht werden kann.

Es zeigt sich die höhere Dynamik in der Regelung, also ein rascheres Erreichen des Sollwertes, als auch eine geringere Abweichung von dem Sollwert über die Zeit.

Ein gewünschter Massenstrom eines Fluids kann somit sehr rasch und exakt eingestellt werden, zeitlich verzögertes Überschwingen wird deutlich verringert.

## Patentansprüche

1. Kompensationselement (1) zur aktiven Dämpfung von Schwingungen eines Mediums (24), insbesondere eines Fluids, umfassend
- einen Hohlkörper (20), der ein Innenvolumen (23) aufweist,
wobei in dem Innenvolumen (23) ein Kompensationsvolumen (41) ausgebildet wird,
wobei der Hohlkörper (20) ferner zumindest zwei Öffnungen (21, 22) aufweist, welche das Kompensationsvolumen (41) mit der Umgebung verbinden, und
- zumindest einen Aktuator (30), welcher im Betrieb das Kompensationsvolumen (41) vergrößern oder verkleinern kann, **dadurch gekennzeichnet, dass** ein Kraftsensor (32) an dem Aktuator (30) vorgesehen ist, welcher zwischen Aktuator und Kompensationsvolumen (41) angeordnet ist und welcher eine Änderung der Druckkraft auf den Aktuator (30) infolge einer Änderung des Kompensationsvolumens (41) erfasst.

2. Kompensationselement (1) nach einem der vorstehenden Ansprüche, **dadurch gekennzeichnet, dass** das Kompensationselement (1) eine Fluidleitung (51, 52), ein Rohrleitungssystem, eine hydraulische Strecke, eine Druckleitung oder ein geeignetes Behältnis oder Gefäß zur Aufnahme des Mediums, insbesondere des Fluids aufweist.

3. Kompensationselement (1) nach vorstehendem Anspruch 2, **dadurch gekennzeichnet, dass** die Öffnungen (21, 22) des Kompensationselements (1) mit der Fluidleitung (51, 52) kraft- und/oder formschlüssig verbunden sind, wobei im Betrieb das viskose Medium (24) aus der Fluidleitung (51, 52) in das Kompensationsvolumen (41) gelangen oder fließen kann.

4. Kompensationselement (1) nach einem der vorstehenden Ansprüche 2 und 3, **dadurch gekennzeichnet, dass** die erste Öffnung (21) des Hohlkörpers (20) mit zumindest einem Abschnitt (56) der Fluidleitung (51, 52) verbunden ist, welcher der Druckschwankung ausgesetzt ist, und/oder dass die zweite Öffnung (22) des Hohlkörpers (20) mit der Fluidleitung (51, 52) verbunden ist.

5. Kompensationselement (1) nach einem der vorstehenden Ansprüche, **dadurch gekennzeichnet, dass** der Aktuator (30) im Betrieb durch eine Bewegung, vorzugsweise durch eine Hubbewegung, die Größe des Kompensationsvolumens (41) verändern kann, vorzugsweise in Abhängigkeit von Druckschwankungen in der Fluidleitung (51, 52).

6. Kompensationselement (1) nach einem der vorstehenden Ansprüche, **dadurch gekennzeichnet, dass** das Innenvolumen (23) mittels einer flexiblen Membran (43) in zwei Teilvolumen unterteilt ist, wodurch neben dem Kompensationsvolumen (41) ein zusätzliches Ausgleichsvolumen (42) ausgebildet wird.

7. Kompensationselement (1) nach einem der vorstehenden Ansprüche, **dadurch gekennzeichnet, dass** ein Druckkörper (44) vorgesehen ist, welcher von dem Aktuator (30) bewegt werden und dabei auf die flexible Membran (43) einwirken kann.

8. Kompensationselement (1) nach einem der vorstehenden Ansprüche, **dadurch gekennzeichnet, dass** zumindest ein Drucksensor (61, 62, 63, 70) zur Bestimmung des Gesamtdruckes vorgesehen ist, vorzugsweise in zumindest einer Öffnung (21, 22) des Hohlkörpers (20) und/oder in der Fluidleitung (51, 52).

9. Kompensationselement (1) nach Anspruch 2 und vorzugsweise nach einem weiteren der vorstehenden Ansprüche, **dadurch gekennzeichnet, dass** der Hohlkörper (20) mit einem Innenvolumen (23) durch die Fluidleitung (51, 52) bereitgestellt wird.

10. Kompensationselement (1) nach vorstehendem Anspruch, **dadurch gekennzeichnet, dass** die Volumenänderung durch eine im Wesentlichen radiale Auslenkung der Fluidleitung (51, 52) als Ganzes oder durch Auslenkung nur einer Wand der Fluidleitung (51, 52) mittels des Aktuators (30) im Betrieb bewirkt wird.

11. Kompensationselement (1) nach vorstehendem Anspruch 10, **dadurch gekennzeichnet, dass** die Fluidleitung (51, 52) in ihrer Längsrichtung flexibel ausgebildet ist und die Volumenänderung durch eine axiale Längenänderung der Fluidleitung (51, 52) bewirkt wird.

12. Verfahren zum aktiven Dämpfen von Schwingungen eines Mediums (24), insbesondere eines Fluids, umfassend die folgenden Schritte:
- Bereitstellen eines Kompensationselements (1) nach einem der Ansprüche 1 bis 11,
- Erfassen des Gesamtdruckes eines Mediums (24) in einer Fluidleitung (51, 52) mit einem Drucksensor (61, 62, 63, 70)
- Ermitteln der eingangsseitigen Druckdifferenz ΔP_{E} zu einem vorbestimmten Druck P,
- Berechnen eines Vorgabewertes für einen elektrischen Parameter, insbesondere die elektrische Spannung, für einen Aktuator (30) und übermitteln des Vorgabewertes an den Aktuator (30),
- Ändern des Kompensationsvolumens (41) mittels des Aktuators (30) anhand des Vorgabewertes zur Verkleinerung oder Vergrößerung des Kompensationsvolumens (41) derart, dass durch die Änderung des Volumens die Druckdifferenz kompensiert werden kann.

13. System (100) zum aktiven Dämpfen von Vibrationen eines viskosen Mediums (24), insbesondere eines Fluids, ausgebildet zur Ausführung eines Verfahrens nach vorstehendem Anspruch und/oder umfassend ein Kompensationselement (1) nach einem der Ansprüche 1 bis 11.

14. System (100) zum Kontrollieren eines Massenstromes eines Mediums (24), insbesondere eines Fluids, umfassend ein Kompensationselement (1) nach einem der Ansprüche 1 bis 11.

15. Maschine (50), Anlage oder sonstigen Einrichtung, insbesondere im Bereich der Halbleiterindustrie, umfassend ein Kompensationselement (1) nach einem der Ansprüche 1 bis 11.

## Claims

1. A compensation element (1) for actively damping vibrations of a medium (24), in particular a fluid, comprising:
- a hollow body (20) having an internal volume (23),
with a compensation volume (41) being formed in the internal volume (23),
with the hollow body (20) further having at least two openings (21, 22) which connect the compensation volume (41) to the environment; and
- at least one actuator (30) which can increase or decrease the compensation volume (41) during operation;
**characterised in that** a force sensor (32) is provided on said actuator (30), which is arranged between the actuator and the compensation volume (41) and which captures a change in the pressure force acting on the actuator (30) as a result of a change in the compensation volume (41).

2. The compensation element (1) according to any one of the preceding claims, **characterised in that** the compensation element (1) comprises a fluid conduit (51, 52), a piping system, a hydraulic line, a pressure line, or any suitable container or vessel adapted to accommodate the medium, in particular the fluid.

3. The compensation element (1) according to the preceding claim 2, **characterised in that** the openings (21, 22) of the compensation element (1) are connected to the fluid conduit (51, 52) in a force-fitting and/or form-fitting manner, wherein the viscous medium (24) can pass or flow from the fluid conduit (51, 52) into the compensation volume (41) during operation.

4. The compensation element (1) according to any one of the preceding claims 2 and 3, **characterised in that** the first opening (21) of the hollow body (20) is connected to at least a portion (56) of the fluid conduit (51, 52), which is exposed to the pressure fluctuation, and/or that the second opening (22) of the hollow body (20) is connected to the fluid conduit (51, 52).

5. The compensation element (1) according to any one of the preceding claims, **characterised in that**, during operation, the actuator (30) is able to change the size of the compensation volume (41) by a movement, preferably by a stroke movement, preferably as a function of pressure fluctuations in the fluid conduit (51, 52).

6. The compensation element (1) according to any one of the preceding claims, **characterised in that** the internal volume (23) is divided into two partial volumes by a diaphragm (43), thereby defining an additional balancing volume (42) besides the compensation volume (41).

7. The compensation element (1) according to any one of the preceding claims, **characterised in that** a pressure body (44) is provided, which can be moved by the actuator (30) and can thereby act on the flexible diaphragm (43).

8. The compensation element (1) according to any one of the preceding claims, **characterised in that** at least one pressure sensor (61, 62, 63, 70) is provided for determining the total pressure, preferably inside at least one opening (21, 22) of the hollow body (20), and/or inside the fluid conduit (51, 52).

9. The compensation element (1) according to claim 2 and preferably according to a further one of the preceding claims, **characterised in that** the hollow body (20) having an internal volume (23) is provided by the fluid conduit (51, 52).

10. The compensation element (1) according to the preceding claim, **characterised in that** the change in volume is caused by the actuator (30) through a substantially radial deflection of the fluid conduit (51, 52) as a whole or by deflection of only one wall of the fluid conduit (51, 52) during operation.

11. The compensation element (1) according to the preceding claim 10, **characterised in that** the fluid conduit (51, 52) is adapted so as to be flexible along its longitudinal extension, and the change in volume is caused by an axial change in length of the fluid conduit (51, 52) .

12. A method for actively damping vibrations of a medium (24), in particular a fluid, comprising the steps of:
- providing a compensation element (1) according to any one of the preceding claims 1 to 11;
- capturing the total pressure of a medium (24) in a fluid conduit (51, 52) using a pressure sensor (61, 62, 63, 70);
- determining the inlet side pressure difference ΔPᵢₙ relative to a predefined pressure P;
- calculating an input value for an electrical parameter, in particular for the electrical voltage, for an actuator (30), and transmitting the input value to the actuator (30);
- using the actuator (30) to change the compensation volume (41) on the basis of the input value to decrease or increase the compensation volume (41) in such a way that the pressure difference can be compensated for by the change in volume.

13. A system (100) for actively damping vibrations of a viscous medium (24), in particular a fluid, configured for performing a method according to the preceding claim and/or comprising a compensation element (1) according to any one of claims 1 to 11.

14. A system (100) for controlling a mass flow rate of a medium (24), in particular a fluid, comprising a compensation element (1) according to any one of claims 1 to 11.

15. A machine (50), installation or other equipment, in particular in the semiconductor industry sector, comprising a compensation element (1) according to any one of claims 1 to 11.

## Revendications

1. Élément de compensation (1) pour l'amortissement actif des oscillations d'un milieu (24), en particulier d'un fluide, comprenant:
- un corps creux (20) présentant un volume intérieur (23), un volume de compensation (41) étant formé dans ledit volume intérieur, le corps creux (20) présentant en outre au moins deux ouvertures (21, 22) reliant le volume de compensation (41) à l'environnement, et
- au moins un actionneur (30) qui, en fonctionnement, peut agrandir ou réduire le volume de compensation (41),
**caractérisé en ce qu'**un capteur de force (32) est prévu sur l'actionneur (30), lequel est disposé entre l'actionneur et le volume de compensation (41) et lequel détecte une variation de la force de pression sur l'actionneur (30) suite à une variation du volume de compensation (41).

2. Élément de compensation (1) selon l'une quelconque des revendications précédentes, **caractérisé en ce que** l'élément de compensation (1) présente une conduite de fluide (51, 52), un système de conduites, une ligne hydraulique, une conduite de pression ou un récipient ou un contenant approprié pour recevoir le milieu, en particulier le fluide.

3. Élément de compensation (1) selon la revendication précédente 2, **caractérisé en ce que** les ouvertures (21, 22) de l'élément de compensation (1) sont reliées à la conduite de fluide (51, 52) de manière solidaire en force et/ou en forme, le milieu visqueux (24) pouvant pénétrer ou s'écouler de la conduite de fluide (51, 52) dans le volume de compensation (41) en fonctionnement.

4. Élément de compensation (1) selon l'une quelconque des revendications précédentes 2 et 3, **caractérisé en ce que** la première ouverture (21) du corps creux (20) est reliée à au moins une section (56) de la conduite de fluide (51, 52), laquelle est exposée à la fluctuation de pression, et/ou **en ce que** la deuxième ouverture (22) du corps creux (20) est reliée à la conduite de fluide (51, 52).

5. Élément de compensation (1) selon l'une quelconque des revendications précédentes, **caractérisé en ce que** l'actionneur (30), en fonctionnement, peut modifier la taille du volume de compensation (41) par un mouvement, de préférence par un mouvement de course, de préférence en fonction de fluctuations de pression dans la conduite de fluide (51, 52).

6. Élément de compensation (1) selon l'une quelconque des revendications précédentes, **caractérisé en ce que** le volume intérieur (23) est divisé en deux volumes partiels au moyen d'une membrane flexible (43), par quoi un volume d'équilibrage supplémentaire (42) est formé en plus du volume de compensation (41).

7. Élément de compensation (1) selon l'une quelconque des revendications précédentes, **caractérisé en ce qu'**un corps de pression (44) est prévu, lequel peut être déplacé par l'actionneur (30) et peut ainsi agir sur la membrane flexible (43).

8. Élément de compensation (1) selon l'une quelconque des revendications précédentes, **caractérisé en ce qu'**au moins un capteur de pression (61, 62, 63, 70) est prévu pour déterminer la pression totale, de préférence dans au moins une ouverture (21, 22) du corps creux (20) et/ou dans la conduite de fluide (51, 52).

9. Élément de compensation (1) selon la revendication 2 et de préférence selon une autre des revendications précédentes, **caractérisé en ce que** le corps creux (20) présentant un volume intérieur (23) est fourni par la conduite de fluide (51, 52).

10. Élément de compensation (1) selon la revendication précédente, **caractérisé en ce que** la variation de volume est provoquée par une déviation sensiblement radiale de la conduite de fluide (51, 52) dans son ensemble ou par une déviation seulement d'une paroi de la conduite de fluide (51, 52) au moyen de l'actionneur (30) en fonctionnement.

11. Élément de compensation (1) selon la revendication précédente 10, **caractérisé en ce que** la conduite de fluide (51, 52) est formée de manière flexible dans sa direction longitudinale et la variation de volume est provoquée par une variation axiale de longueur de la conduite de fluide (51, 52).

12. Procédé d'amortissement actif d'oscillations d'un milieu (24), en particulier d'un fluide, comprenant les étapes suivantes:
- fournir un élément de compensation (1) selon l'une quelconque des revendications 1 à 11,
- detecter la pression totale d'un milieu (24) dans une conduite de fluide (51, 52) au moyen d'un capteur de pression (61, 62, 63, 70),
- determiner la différence de pression côté entrée ΔP_{E} par rapport à une pression prédéterminée P,
- calculer une valeur de consigne pour un paramètre électrique, en particulier la tension électrique, pour un actionneur (30) et transmettre la valeur de consigne à l'actionneur (30),
- modifier le volume de compensation (41) au moyen de l'actionneur (30) sur la base de la valeur de consigne pour réduire ou agrandir le volume de compensation (41) de telle manière que par la variation du volume la différence de pression peut être compensée.

13. Système (100) d'amortissement actif de vibrations d'un milieu visqueux (24), en particulier d'un fluide, conçu pour exécuter un procédé selon la revendication précédente et/ou comprenant un élément de compensation (1) selon l'une quelconque des revendications 1 à 11.

14. Système (100) pour contrôler un débit massique d'un milieu (24), en particulier d'un fluide, comprenant un élément de compensation (1) selon l'une quelconque des revendications 1 à 11.

15. Machine (50), installation ou autre dispositif, en particulier dans le domaine de l'industrie des semi-conducteurs, comprenant un élément de compensation (1) selon l'une quelconque des revendications 1 à 11.
